# EUROPEAN PATENT APPLICATION

(11) **EP 4 818 130 A1**
(43) Date of publication of application: **07.10.2026**
(21) Application number: 24897645.8
(22) Date of filing: 28.11.2024
(51) Int. Cl.: C03B 33/09, C03B 33/04, C03C 19/00, C03C 27/12

(54) **METHOD FOR PRODUCING GLASS ARTICLE, AND GLASS ARTICLE**

(30) Priority: 01.12.2023 JP 2023203999
(71) Applicant: AGC Inc., Chiyoda-ku Tokyo 100-8405 (JP)
(72) Inventor: SAITO, Isao, Tokyo 100-8405 (JP); WATANABE, Yasuaki, Tokyo 100-8405 (JP); FUJIWARA, Takuma, Tokyo 100-8405 (JP); ONO, Takeaki, Tokyo 100-8405 (JP)
(74) Representative: Müller-Boré & Partner Patentanwälte PartG mbB
(86) International application number: PCT/JP2024/042167
(87) International publication number: WO 2025/115961

(57) **Abstract**

A glass article having a desired shape is efficiently obtained while reducing or preventing deterioration in quality. A glass article production method includes setting an imaginary line on a main surface of a glass preform including a glass substrate having a thickness of 0.4 mm or more, obtaining a glass plate by irradiating the glass preform with laser light along the imaginary line to cut the glass preform along the imaginary line and separating a portion enclosed by the imaginary line from the glass preform, and obtaining a glass article by grinding a cut surface of the glass plate using a grindstone. The imaginary line has a shape having a start point and an end point being positioned on end surfaces of the glass preform, the shape having a trajectory concave inward in an in-plane direction of the main surface of the glass preform, or the imaginary line has a shape having a closed curve. The imaginary line has a perimeter of 60 mm or more. A damaged layer is formed on the cut surface of the glass plate by cutting the glass preform by irradiation with the laser light, and the damaged layer has a width satisfying Formula (1). The damaged layer is removed by grinding using the grindstone.

## Description

### Field

The present invention relates to a glass article production method and a glass article.

### Background

A method is known in which a glass article is obtained by irradiating glass with laser light to cut the glass. For example, Patent Literature 1 describes that a material is irradiated with pulsed laser light to form a fault line, and the material is cut along the fault line. In this case, the material can be cut along the fault line by exerting an external stress on the fault line to break the material. Patent Literature 1 also describes that the material can be cut by irradiating the material with IR laser light along the fault line. A technique is also known in which glass is cut by scraping off a portion of the glass using a grindstone such as a diamond wheel.

Patent Literature 1: Japanese Patent No. 6552503

### Summary

### Technical Problem

In this respect, for purpose of cutting out an outline of a product or of forming a hole inside a product for installing a part, cover glass of an in-vehicle display, glass for a vehicle window, cover glass for a vehicle sensor, and the like require, in recent years, cutting out a relatively large shape having a perimeter of 60 mm or more from glass having a thickness of 0.4 mm or more. Cutting the glass by exerting an external stress along the fault line formed using pulsed laser light to cut out such a large shape will produce a large contact area between cut surfaces of the glass, and thus produce large friction between the cut-out portion and the surrounding glass plate, which may prevent smooth separation of the cut-out portion. Even when the separation is successful, large frictional force occurring in the separation may cause deterioration in quality of the cut surface. In addition, in a case where the glass is cut by scraping off a portion of the glass using a grindstone to cut out such a large shape, an excessively long machining time may be required.

The present invention has been made in view of the foregoing issues. An object of the present invention is to provide a glass article production method that enables a glass article having a desired shape to be efficiently obtained while reducing or preventing deterioration in quality, and to provide the glass article.

### Solution to Problem

A glass article production method of the present disclosure includes: setting an imaginary line on a main surface of a glass preform including a glass substrate having a thickness of 0.4 mm or more; obtaining a glass plate by irradiating the glass preform with laser light having a wavelength in a range from 9.1 µm to 10.8 µm inclusive along the imaginary line to cut the glass preform along the imaginary line and separating a portion enclosed by the imaginary line from the glass preform; and obtaining a glass article by grinding a cut surface of the glass plate using a grindstone, wherein the imaginary line has a shape having a start point and an end point being positioned on end surfaces of the glass preform, the shape having a trajectory concave inward in an in-plane direction of the main surface of the glass preform, or the imaginary line has a shape having a closed curve, the imaginary line has a perimeter of 60 mm or more, a damaged layer is formed on the cut surface of the glass plate by cutting the glass preform by irradiation with the laser light, and the damaged layer has a width D satisfying Formula (1) below, and the damaged layer is removed by grinding using the grindstone: $0.2 * t \leq D \leq 2000 μm$ (1) where t is a thickness (µm) of the glass preform.

A glass article of the present disclosure including a first glass article having a thickness of 0.4 mm or more, a second glass article having a thickness of 0.4 mm or more, and an intermediate layer provided between the first glass article and the second glass article, wherein an opening having a perimeter of 60 mm or more is formed in each of the first glass article and the second glass article, the opening of the first glass article and the opening of the second glass article overlap each other as viewed from a thickness direction of the glass article, and an end surface of the opening of the first glass article and an end surface of the opening of the second glass article are misaligned with each other by an amount of misalignment of 100 µm or less in an in-plane direction of the glass article.

### Advantageous Effects of Invention

According to the present invention, it is possible to efficiently obtain a glass article having a desired shape while reducing or preventing deterioration in quality.

### Brief Description of Drawings

FIG. 1 is a flowchart illustrating a flow for producing a glass article according to the present embodiment.
FIG. 2 is a schematic cross-sectional view of a glass preform according to a first embodiment.
FIG. 3 is a schematic diagram illustrating an example of imaginary line in the present embodiment.
FIG. 4 is a schematic diagram for explaining irradiation of the glass preform with laser light.
FIG. 5 is a schematic diagram for explaining irradiation of the glass preform with laser light.
FIG. 6 is a schematic diagram of a glass plate.
FIG. 7 is a schematic diagram for explaining grinding of the glass plate.
FIG. 8 is a schematic diagram of a glass article.
FIG. 9 is a schematic diagram illustrating the imaginary line according to a first modification.
FIG. 10 is a schematic diagram illustrating the imaginary line according to a second modification.
FIG. 11 is a schematic diagram illustrating the glass article according to the second modification.
FIG. 12 is a schematic cross-sectional view of the glass preform according to a second embodiment.
FIG. 13 is a schematic cross-sectional view of the glass plate in the second embodiment.
FIG. 14 is a schematic top view of the glass article according to the second embodiment.
FIG. 15 is a schematic cross-sectional view of the glass article according to the second embodiment.
FIG. 16 is a schematic diagram of a grindstone in the second embodiment.
FIG. 17 is a schematic diagram of the grindstone in the second embodiment.

### Description of Embodiments

Preferred embodiments of the present invention will hereinafter be described in detail with reference to the accompanying drawings. Note that the present invention is not limited by the embodiments, and in a case where there are a plurality of embodiments, the present invention includes a combination of the embodiments. Numerical values encompass a range obtained by rounding.

### (First Embodiment)

### (Glass article production method)

In a method for producing a glass article 20T according to the present embodiment, a portion enclosed by an imaginary line R is cut out from a glass preform 1 to obtain a glass plate 20, and the glass plate 20 is then ground to produce the glass article 20T.

The glass plate 20 is a portion of the glass preform 1 obtained by cutting. The glass plate 20 used to obtain the glass article 20T may be a cut-out portion of the glass preform 1 (i.e., the portion enclosed by the imaginary line R) or a portion left after cutting out performed on the glass preform 1 (i.e., the portion excluding the cut-out portion). The following example will be described assuming that the portion left after cutting out performed on the glass preform 1 is the glass plate 20 used to obtain the glass article 20T.

The glass article 20T in the present embodiment is in-vehicle glass to be installed in a vehicle. The glass article 20T may be an article provided in an in-vehicle display device to be used as a cover material on a surface of the in-vehicle display device, or may be used as a window member of a vehicle. When used as a window member of a vehicle, the glass article 20T may be used as a windshield, in other words, a windshield, of a vehicle V. However, the glass article 20T may be used in any application, and may be used for an application other than in-vehicle applications.

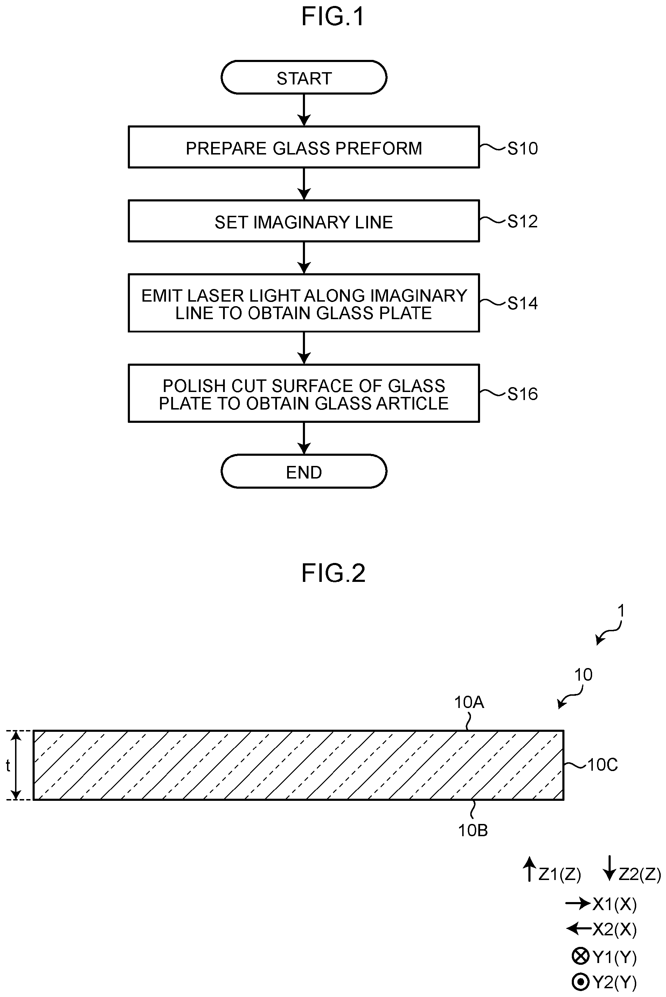

FIG. 1 is a flowchart illustrating a flow for producing the glass article according to the present embodiment. As illustrated in FIG. 1, in producing the glass article 20T, the glass preform 1 is prepared (step S10); the imaginary line R is set on a main surface 10A of the glass preform 1 (step S12); the main surface 10A is irradiated with laser light L along the imaginary line R to obtain the glass plate 20 (step S14); and a cut surface 20C of the glass plate 20 is ground to obtain the glass article 20T (step S16). Details of each step will hereinafter be described.

### (Preparation of Glass preform)

FIG. 2 is a schematic cross-sectional view of the glass preform according to the first embodiment. In the present production method, the glass preform 1 is prepared at the beginning. The glass preform 1 is a member having a plate shape. Note that the plate shape as used herein is not limited to a flat plate shape, but may have a curved surface, and may refer to a plate shape having a width of a main surface thereof longer than the thickness of the plate shape. The glass preform 1 includes a glass substrate 10, which is a transparent glass plate. The term "transparent" as used herein may mean a property of transmitting visible light. The glass preform 1 may be laminated glass including a plurality of glass substrates 10 being laminated, but in the example of the present embodiment, the glass preform 1 is a glass plate including one glass substrate 10 as illustrated in FIG. 1.

Hereinafter, one main surface of the glass preform 1 is referred to as main surface 10A, a main surface on the opposite side of the main surface 10A is referred to as main surface 10B, and an end surface (side surface) connecting the main surface 10A and the main surface 10B is referred to as end surface 10C. In the present embodiment, since the glass preform 1 is composed of one glass substrate 10, it can be said that one main surface of the glass substrate 10 is the main surface 10A and the other main surface of the glass substrate 10 is the main surface 10B.

A thickness direction of the glass preform 1, that is, a direction connecting the main surface 10B and the main surface 10A, is defined as a Z direction. In addition, one direction orthogonal to the Z direction (left-right direction in the example of FIG. 2) is defined as an X direction, and a direction orthogonal to the Z direction and to the X direction (direction perpendicular to the paper surface in the example of FIG. 2) is defined as a Y direction. In addition, one direction along the X direction (right direction in the example of FIG. 2) is defined as a direction X1, and the other direction along the X direction (left direction in the example of FIG. 2) is defined as a direction X2. One direction along the Y direction (direction into the paper in the example of FIG. 2) is defined as a direction Y1, and the other direction along the Y direction (direction out of the paper in the example of FIG. 2) is defined as a direction Y2. One direction along the Z direction (direction from the main surface 10B toward the main surface 10A) is defined as a direction Z1, and the other direction along the Z direction (direction from the main surface 10A toward the main surface 10B) is defined as a direction Z2.

Note that the Z direction as used herein may be a direction perpendicular to the main surface 10A at the center position of the glass preform 1.

In this respect, the thickness of the glass substrate 10 is defined as a thickness "t". The thickness t refers to the thickness of the glass preform 1 itself when the glass preform 1 includes one glass substrate 10, and refers to the thickness of one glass substrate 10 when the glass preform 1 includes a plurality of glass substrates 10.

The thickness t of the glass substrate 10 is 0.4 mm or more, preferably in a range from 0.7 mm to 5.0 mm inclusive, and more preferably in a range from 0.8 mm to 3.0 mm inclusive. Note that the thickness t refers to a length in the Z direction from the main surface 10A to the main surface 10B.

In the example of FIG. 2, the glass preform 1 (the glass substrate 10) has a shape of a rectangular flat plate when viewed from the Z direction, but the shape of the glass preform 1 (the glass substrate 10) may be arbitrary. For example, the shape of the glass preform 1 (the glass substrate 10) as viewed from the Z direction is not limited to a rectangle, but may be a polygon, a circle, an ellipse, or the like.

In the example of FIG. 2, the main surfaces 10A and 10B of the glass preform 1 (the glass substrate 10) each have a shape of a smooth flat plate. The shape is, however, not limited thereto. The flat plate may have a curved shape. That is, the main surfaces 10A and 10B of the glass preform 1 (the glass substrate 10) may each have a curved surface shape convex in the Z direction.

When the main surfaces 10A and 10B of the glass preform 1 (the glass substrate 10) each have a curved surface shape convex in the Z direction, the main surfaces 10A and 10B of the glass preform 1 (the glass substrate 10) each have a radius of curvature of preferably 10000 mm or less, more preferably 5000 mm or less, and still more preferably 3000 mm or less. When the main surfaces 10A and 10B of the glass preform 1 (the glass substrate 10) each have a curved surface shape convex in the Z direction, the main surfaces 10A and 10B of the glass preform 1 (the glass substrate 10) each have a radius of curvature of preferably 10 mm or more, more preferably 50 mm or more, still more preferably 100 mm or more, and even more preferably 200 mm or more. In other words, when the main surfaces 10A and 10B of the glass preform 1 (the glass substrate 10) each have a curved surface shape convex in the Z direction, the main surfaces 10A and 10B of the glass preform 1 (the glass substrate 10) each have a radius of curvature preferably in a range from 10 mm to 10000 mm inclusive, more preferably in a range from 50 mm to 5000 mm inclusive, still more preferably in a range from 100 mm to 3000 mm inclusive, and even more preferably in a range from 200 mm to 3000 mm inclusive.

The glass substrate 10 has a fracture toughness value K_{IC} preferably of 0.6 (MPa*m^{0.5}) or more, more preferably in a range from 0.6 (MPa*m^{0.5}) to 1.00 (MPa*m^{0.5}) inclusive, and still more preferably in a range from 0.65 (MPa*m^{0.5}) to 0.70 (MPa*m^{0.5}) inclusive. The fracture toughness value K_{IC} can be measured by, for example, the double cleavage drilled compression (DCDC) method described in Non-Patent Literature (NEW GASS Vol. 15, No. 2, 2000, p. 18).

The glass substrate 10 may be amorphous glass or crystallized glass containing crystals on a surface and/or in the inside thereof. The glass substrate 10 can be made of, for example, alkali-free glass, soda-lime glass, soda-lime silicate glass, aluminosilicate glass, borosilicate glass, lithium aluminosilicate glass, borosilicate glass, or the like. The material of the glass substrate 10 is preferably alkali glass for appropriately performing chemical strengthening. More specifically, the material of the glass substrate 10 is preferably aluminosilicate glass or lithium aluminosilicate glass, which allows a large stress to be easily introduced through a strengthening process even when the thickness is small, thereby enabling a high-strength glass to be provided even when the thickness is small. A glass for chemical strengthening based on aluminosilicate glass (e.g., "Dragontrail (registered trademark)" manufactured by AGC Inc.) is also suitably used.

The glass substrate 10 may contain 50% to 80% SiO₂, 1% to 20% Al₂O₃, and 6% to 20% Na₂O in mole percent (mol%) based on the amounts of oxides. Alternatively, the glass substrate 10 may contain 50% to 80% SiO₂, 0.1% to 25% Al₂O₃, 3% to 30% Li₂O+Na₂O+K₂O, 0% to 25% MgO, 0% to 25% CaO, and 0% to 5% ZrO₂ in mol% based on the amounts of oxides. Still alternatively, the glass substrate 10 may contain 50% to 80% SiO₂, 1% to 20% Al₂O₃, 6% to 20% Na₂O, 0% to 11% K₂O, 0% to 15% MgO, 0% to 6% CaO, and 0% to 5% ZrO₂ in mol% based on the amounts of oxides. Note that a numerical range expressed using a word "to" means a range including numerical values described before and after the word "to" as a lower limit value and an upper limit value. In addition, for example, 50% to 80% as described above refers to a value in a range from 50% to 80% inclusive based on the mole percent of the total amount of the glass substrate 10 defined as 100%. This also applies to other numerical ranges. In addition, for example, Li₂O+Na₂O+K₂O refers to the total content of Li₂O, Na₂O, and K₂O, and this also applies to other cases where the "+" sign is used.

More specifically, a more preferable composition of the glass substrate 10 includes the following composition of glass. Note that, for example, a phrase "containing 0% to 25% MgO" means that MgO is not essential but may be contained up to 25%. Glass of item (i) is included in soda-lime silicate glass. Glasses of items (ii) and (iii) are included in aluminosilicate glass. Glasses of items (iv) to (vi) are included in lithium aluminosilicate glass.
(i) Glass having a composition expressed in mol%, containing 63% to 73% SiO₂, 0.1% to 5.2% Al₂O₃, 10% to 16% Na₂O, 0% to 1.5% K₂O, 0% to 5% Li₂O, 5% to 13% MgO, and 4% to 10% CaO.
(ii) Glass having a composition expressed in mol%, containing 50% to 74% SiO₂, 1% to 10% Al₂O₃, 6% to 14% Na₂O, 3% to 11% K₂O, 0% to 5% Li₂O, 2% to 15% MgO, 0% to 6% CaO, and 0% to 5% ZrO₂, where a total content of SiO₂ and Al₂O₃ is 75% or less, a total content of Na₂O and K₂O is 12% to 25%, and a total content of MgO and CaO is 7% to 15%.
(iii) Glass having a composition expressed in mol%, containing 68% to 80% SiO₂, 4% to 10% Al₂O₃, 5% to 15% Na₂O, 0% to 1% K₂O, 0% to 5% Li₂O, 4% to 15% MgO, and 0% to 1% ZrO₂.
(iv) Glass having a composition expressed in mol%, containing 67% to 75% SiO₂, 0% to 4% Al₂O₃, 7% to 15% Na₂O, 1% to 9% K₂O, 0% to 5% Li₂O, 6% to 14% MgO, and 0% to 1.5% ZrO₂, where a total content of SiO₂ and Al₂O₃ is 71% to 75%, a total content of Na₂O and K₂O is 12% to 20%, and when CaO is contained, the content thereof is less than 1%.
(v) Glass having a composition expressed in mol%, containing 56% to 73% SiO₂, 10% to 24% Al₂O₃, 0% to 6% B₂O₃, 0% to 6% P₂O₅, 2% to 7% Li₂O, 3% to 11% Na₂O, 0% to 5% K₂O, 0% to 8% MgO, 0% to 2% CaO, 0% to 5% SrO, 0% to 5% BaO, 0% to 5% ZnO, 0% to 2% TiO₂, and 0% to 4% ZrO₂. (vi) Glass having a composition expressed in mol%, containing 58% to 80% SiO₂, 13% to 18% Al₂O₃, 0% to 5% B₂O₃, 0.5% to 4% P₂O₅, 3% to 10% Li₂O, 5% to 20% Na₂O, 0% to 2% K₂O, 0% to 11% MgO, 0% to 20% CaO, 0% to 20% SrO, 0% to 15% BaO, 0% to 10% ZnO, 0% to 1% TiO₂, and 0% to 2% ZrO₂.

The glass substrate 10 is preferably not chemically strengthened. Furthermore, preferably, neither the glass plate 20 obtained by cutting the glass substrate 10 nor the glass article 20T obtained by grinding the glass plate 20 is chemically strengthened. Performing no chemical strengthening on the glass substrate 10 can reduce or prevent occurrence of chipping during cutting or chamfering. Therefore, the material (composition) of the glass plate 20 and of the glass article 20T is the same as the material (composition) of the glass substrate 10.

Nevertheless, the glass article 20T that has been ground may be chemically strengthened. The chemically strengthened glass article 20T is suitably used as cover glass of a display device. When the glass article 20T that has been ground is chemically strengthened, the composition of the glass substrate 10 corresponds to the composition in a central portion in the plate thickness direction of the glass article 20T. Specifically, it can be said that the glass substrate 10 has, in a chemically strengthened surface layer of the glass article 20T, a composition containing a pre-substitution element instead of a substituted element, where the pre-substitution element is an element replaced and released during chemical strengthening, and the substituted element is an element substituted and incorporated through chemical strengthening.

### (Setting of Imaginary line)

In the present production method, the imaginary line R is set on a main surface of the glass preform 1 that has been prepared. In the present embodiment, the imaginary line R is set on the main surface 10A, but an imaginary line may be set on the main surface 10B on the opposite side. The imaginary line R is a line representing a trajectory of the laser light L to be emitted to the glass preform 1 (i.e., a trajectory of scanning of the irradiation position of the laser light L).

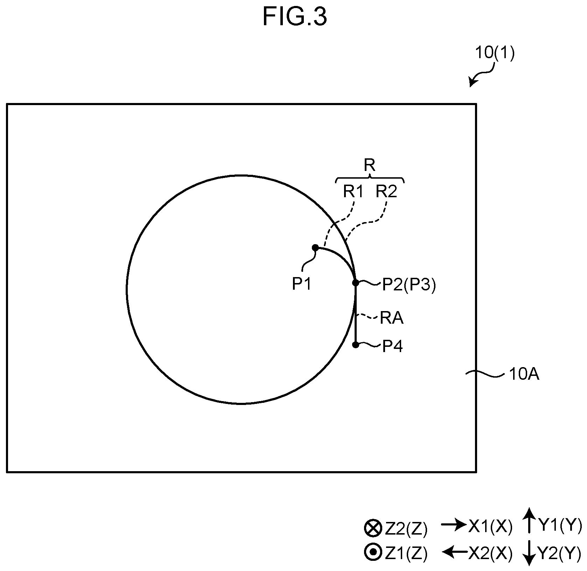

The imaginary line R has a perimeter that is 60 mm or more, preferably in a range from 80 mm to 2000 mm inclusive, more preferably in a range from 100 mm to 1000 mm inclusive, and still more preferably in a range from 254 mm to 769 mm inclusive. The perimeter of the imaginary line R refers to the entire length of the imaginary line R, and refers to a distance along the imaginary line R from a start point of the imaginary line R (a start point P1 in the example of FIG. 3, described later) to an end point of the imaginary line R (an end point P3 in the example of FIG. 3).

The imaginary line R has a shape having a closed curve or a shape having a concave trajectory as viewed from the Z direction. The following describes the imaginary line R having a shape having a closed curve. The imaginary line R having a shape having a concave trajectory will be described in conjunction with a second modification described later.

The imaginary line R having a shape having a closed curve means that at least a certain section of the imaginary line R is a closed curve. The term closed curve refers to a line that is curved at least in a certain section thereof, and has a start point and an end point of the line at a same position. The term closed curve as used herein includes both a line that is curved in the entire section thereof and a line that is curved only in a certain section thereof and is straight in the remaining section thereof. The imaginary line R having a shape having a closed curve may have an arbitrary shape having a closed curve at least in a certain section. In the present embodiment, however, it is preferable that the imaginary line R is a closed curve at least in a certain section and does not extend to the end surface 10C. Such shape of the imaginary line R allows a portion enclosed by the imaginary line R to be cut out to appropriately form the glass plate 20 having an opening H, which is described later.

Note that the description that the imaginary line R does not extend to the end surface 10C can be rephrased as that the entire section of the imaginary line R is positioned inward of the end surface 10C on the main surface 10A in the in-plane direction. The phrase "inward in the in-plane direction" refers to a direction from the end surface 10C toward the center of the main surface 10A as viewed from the Z direction, and a phrase "outward in the in-plane direction" refers to a direction from the center of the main surface 10A toward the end surface 10C as viewed from the Z direction.

FIG. 3 is a schematic diagram illustrating an example of the imaginary line in the present embodiment. In the present embodiment, the imaginary line R includes a second section R2, and the second section R2 is a closed curve. The imaginary line R preferably includes a first section R1 in addition to the second section R2.

The first section R1 is a section from the start point P1 of the imaginary line R to an intermediate point P2. The first section R1 is positioned inward of the end surface 10C on the main surface 10A in the in-plane direction over the entire section from the start point P1 to the intermediate point P2.

The second section R2 is a section of a closed curve connected to the first section R1. More specifically, the second section R2 is a section from the intermediate point P2 to the end point P3, which is the same position as the intermediate point P2, and a trajectory from the intermediate point P2 to the end point P3 is a closed curve encircling the start point P1. The second section R2 is positioned inward of the end surface 10C on the main surface 10A in the in-plane direction over the entire section from the intermediate point P2 to the end point P3.

Note that, in the imaginary line R having a closed curve, the second section R2 is the closed curve, and is, for example, a section that forms a circumference of a target shape to be hollowed out. In contrast, the first section R1 is an arbitrary section provided separately from the closed curve, and is set, for example, in a region in the portion not to be used as a product.

The first section R1 and the second section R2 are preferably connected to each other continuously. That is, the first section R1 and the second section R2 are preferably smoothly connected at the intermediate point P2, which is the boundary point between the first section R1 and the second section R2. In other words, the line passing across the boundary point between the first section R1 and the second section R2 is preferably differentiable at the intermediate point P2.

In the example of FIG. 3, the second section R2 has a circular shape encircling the start point P1, and the first section R1 is a curve continuously connected to the second section R2, as viewed from the Z direction. However, the shape of FIG. 3 is an example. The shape of the second section R2 is not limited to a circular shape, but may be any closed curve encircling the start point P1. For example, the second section R2 may have an elliptical shape or a generally polygonal shape having at least some of the vertexes being rounded (for example, a generally rectangular shape having four vertexes being rounded).

Such continuous connection between the first section R1 and the second section R2 enables reduction or prevention of an increase in a change in a scanning speed (moving speed) of an irradiation device M of the laser light L (described later) upon switching from the first section R1 to the second section R2. This can reduce or prevent occurrence of residual thermal stress due to irradiation energy fluctuation in the vicinity of the intermediate point P2, thereby enabling occurrence of chipping on the cut surface to be reduced or prevented, and the quality to be improved. However, the first section R1 and the second section R2 may be discontinuous with each other. For example, the first section R1 may have a linear shape discontinuous with the second section R2.

In the present embodiment, it is also preferable to set a reserved imaginary line RA in addition to the imaginary line R. The reserved imaginary line RA represents a path of movement of the irradiation device M (described later) to be followed after stopping of irradiation with the laser light L. The reserved imaginary line RA is connected to the second section R2 and extends to a position not included in the second section R2. That is, as illustrated in FIG. 3, the reserved imaginary line RA is a line connecting the end point P3 of the imaginary line R to a point P4 positioned a position apart from the end point P3. The point P4 may be set at an arbitrary position different from the end point P3, and may be, for example, a position not overlapping or overlapping the imaginary line R (the second section R2). In addition, the point P4 may be positioned inside or outside the region enclosed by the second section R2. Note, however, that the reserved imaginary line RA connecting the end point P3 and the point P4 is preferably linear, and is preferably continuously connected to the second section R2. Therefore, in this case, the point P4 is preferably positioned outside the region enclosed by the second section R2.

Setting the reserved imaginary line RA in this manner enables an idle section to be provided for movement of the irradiation device M after stopping of irradiation with the laser light L. This can reduce or prevent occurrence of residual thermal stress due to irradiation energy fluctuation in the vicinity of the end point P3, thereby enabling occurrence of chipping on the cut surface to be reduced or prevented, and the quality to be improved.

In the present embodiment, it is also preferable not to set auxiliary lines other than the imaginary line R. As used herein, the term auxiliary line refers to a trajectory that is provided discontinuously with the imaginary line R and is irradiated with the laser light L. That is, in the present embodiment, it can be said that the glass preform 1 is preferably not irradiated with the laser light L along a trajectory other than the imaginary line R. This can prevent the laser light irradiation time from becoming excessive, thereby enabling the production process to be efficiently performed.

### (Irradiation with Laser light)

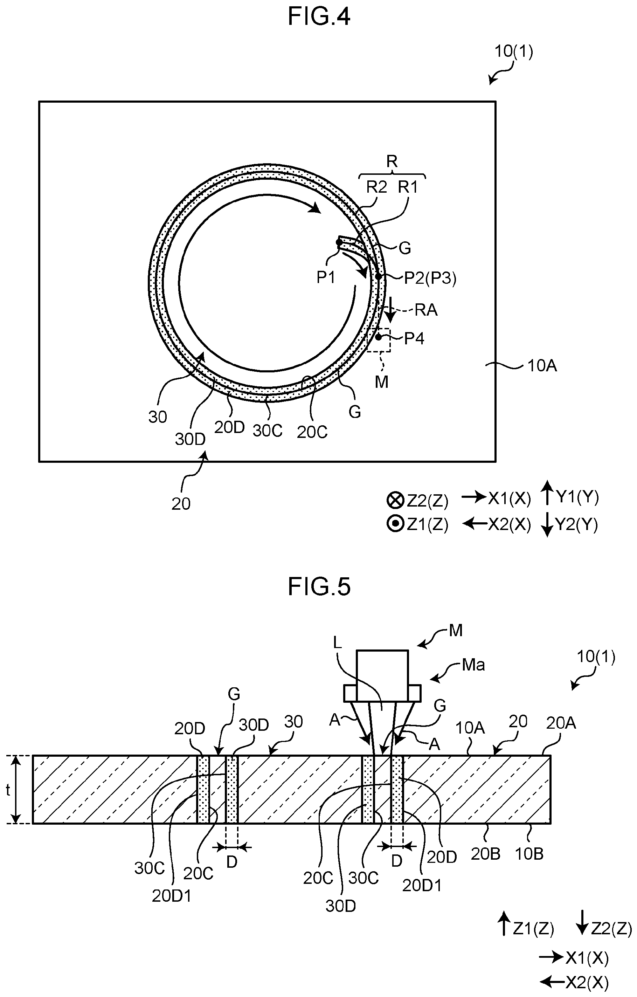

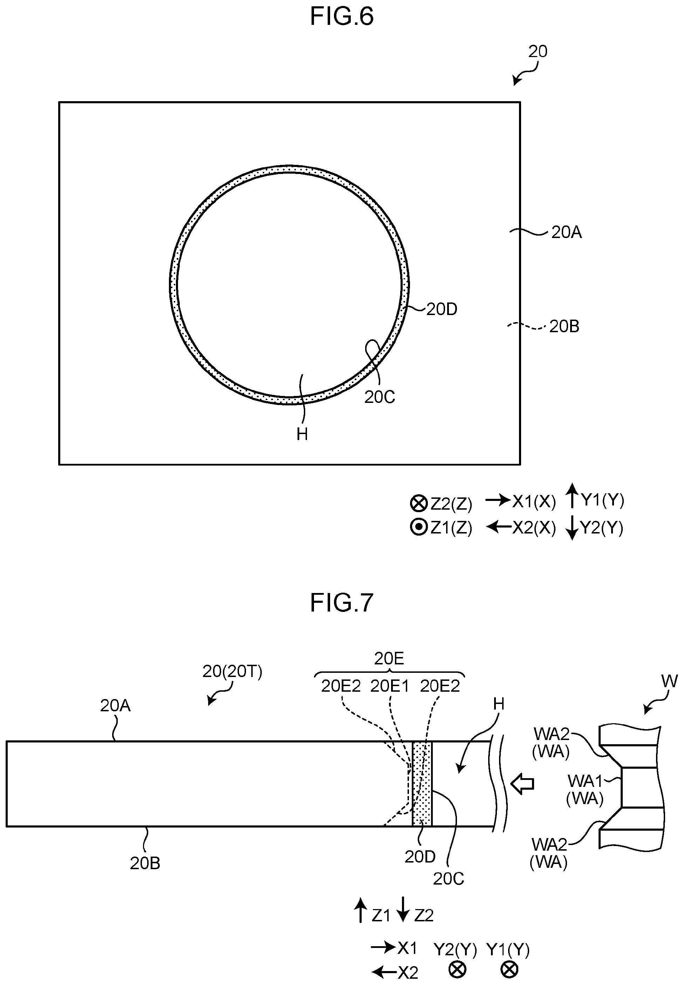

FIGS. 4 and 5 are schematic diagrams for explaining irradiation of the glass preform with the laser light, and FIG. 6 is a schematic diagram of the glass plate. In the present production method, the main surface 10A of the glass preform 1 is irradiated with the laser light L along the imaginary line R as illustrated in FIG. 4. More specifically, in the present embodiment, the irradiation device M, which emits the laser light L, is disposed at a position facing the main surface 10A of the glass preform 1, and the laser light L is emitted from the irradiation device M while the irradiation device M is moved relative to the glass preform 1 along the imaginary line R. As a result, the main surface 10A is irradiated with the laser light L while the irradiation position of the laser light L is scanned (moved relative to the glass preform 1) along the imaginary line R. In the present embodiment, the irradiation device M is moved to cause the irradiation device M to be moved relative to the glass preform 1. However, the configuration may be such that a laser head for emitting the laser light L from the irradiation device M is provided at a fixed position, and the glass preform 1 irradiated with the laser light L is moved to cause the irradiation device M to be moved relative to the glass preform 1 (that is, the irradiation position is moved relative to the glass preform 1).

In the example of FIG. 4, the laser light L is emitted while the irradiation position is scanned along the first section R1 from the start point P1 to the intermediate point P2, and is emitted while the irradiation position is scanned along the second section R2 from the intermediate point P2 to the end point P3. In the example of FIG. 4, irradiation with the laser light L is then stopped at the end point P3, after which the irradiation device M is relatively moved along the reserved imaginary line PA from a position facing the end point P3 to a position facing the point P4. Note that the irradiation position of the laser light L is preferably maintained at the start point P1 for a predetermined time period. That is, the laser light L is scanned along the imaginary line R preferably after the start point P1 is irradiated therewith for a predetermined time period. The predetermined time period in this operation may be any length of time, but may be, for example, about 1 second. Continuing the irradiation for a predetermined time period without moving from the start point P1 as described above enables the glass preform 1 to be cut appropriately.

The laser light L is laser light having a wavelength in an infrared wavelength band ranging from 9.1 µm to 10.8 µm inclusive. At such wavelength, the laser light L is absorbed by the glass preform 1, thereby causing the glass preform 1 to be locally melted in the portion irradiated with the laser light L. The local melting produces a space between the glass preform and the portion enclosed by the imaginary line even when the glass preform is a relatively thick plate having a thickness of 0.4 mm or more and has a shape having a relatively long perimeter of the imaginary line of 60 mm or more. This enables friction to be reduced and separation to be smoothly carried out. More preferably, the laser light has a wavelength ranging from 9.2 µm to 9.4 µm inclusive, at which the glass preform 1 has higher absorption coefficient, thereby enabling the fusion cutting speed to be increased with same output power. The laser light L is preferably CO₂ laser light using CO₂ gas as a medium. In addition, the irradiation device M preferably continuously emits the laser light L while moving the irradiation position of the laser light L. That is, the irradiation device M emits the laser light L not in a pulse configuration in which scanning is performed while the laser light L is emitted and stopped repeatedly, but in a continuous manner in which scanning is performed while the laser light L is emitted continuously.

Furthermore, in the present embodiment, it is preferable that a jet device Ma jets gas A to the portion irradiated with the laser light L while the glass preform 1 is irradiated with the laser light L. The jet device Ma is provided at a position facing the main surface 10A of the glass preform 1, and jets the gas A to the position irradiated with the laser light L on the main surface 10A. This enhances, owing to the gas A, removal of the portion of the glass preform 1 melted by the laser light L, thereby enabling the glass preform 1 to be appropriately fusion-cut along the imaginary line R. The gas A used in this operation may be any gas, examples of which include air, nitrogen, and a rare gas, among which air is preferable. Note that, in the example of FIG. 5, the jet device Ma is attached to the irradiation device M, and jets the gas A to the position irradiated with the laser light L while moving integrally with the irradiation device M. However, the position where the jet device Ma is provided is not limited thereto, and may be arbitrary.

The glass preform 1 is fusion-cut (cut) along the imaginary line R by being irradiated with the laser light L as described above, thereby causing the portion enclosed by the imaginary line R to be cut out from the glass preform 1. In other words, irradiation with the laser light L along the imaginary line R produces a gap G in the glass preform 1 along the imaginary line R, and thus causes separation of the glass preform 1 into a glass plate 30 and the glass plate 20, where the glass plate 30 is the portion enclosed by the imaginary line R (the gap G) and the glass plate 20 is the portion other than the glass plate 30. The glass plate 20 such as, for example, one illustrated in FIG. 6 is thus obtained. The glass plate 20 of the present embodiment has a shape having the opening H formed in the portion where the glass plate 30 has been cut out (the portion enclosed by the imaginary line R). Note that a glass portion (part of the glass preform 1) or a melt of glass may remain in the gap G.

In the present embodiment, the glass article 20T (described later) is produced by grinding the glass plate 20, but the glass article 20T may be produced by grinding the glass plate 30. In addition, the present example assumes that the glass preform 1 is composed of one glass substrate 10. Accordingly, the glass plate 20 and the glass plate 30 are also each composed of one cut portion of the glass substrate 10. Hereinafter, a main surface of the glass plate 20 corresponding to the main surface 10A of the glass preform 1 is referred to as main surface 20A, and a main surface of the glass plate 20 corresponding to the main surface 10B of the glass preform 1 is referred to as main surface 20B.

### (Damaged layer)

Irradiation with the laser light L causes a damaged layer 20D to be formed in the glass plate 20. The damaged layer 20D can be said to be a layer formed over a predetermined depth in the in-plane direction from the cut surface 20C, where the cut surface 20C is the end surface along the imaginary line R of the glass plate 20 formed by cutting with the laser light L. Note that since the glass plate 20 of the present embodiment has a shape having the opening H formed in the portion where the glass plate 30 has been cut out, the cut surface 20C is the surface surrounding the opening H.

The damaged layer 20D is a layer deteriorated by irradiation with the laser light L, and refers to a layer having a changed refractive index or a layer including cracks, in the glass plate 20. The layer having a changed refractive index refers to a layer having a refractive index different from the refractive index at positions in the glass plate 20 outside the damaged layer 20D due to an effect of at least one of the composition, the density, the fictive temperature, and the residual stress. In addition, the layer including cracks refers to a layer including cracks such that the number of cracks per unit volume is greater than the number of cracks per unit volume at positions in the glass plate 20 outside the damaged layer 20D.

The damaged layer 20D can be measured by an optical observation device such as a microscope. For example, when the main surface 20A of the glass plate 20 is observed using VHX6000 manufactured by KEYENCE CORPORATION, a region including a crack or chipping observed on the main surface 20A may be identified as the damaged layer 20D.

Note that a damaged layer 30D is also formed on a cut surface 30C of the glass plate 30. The damaged layer 30D of the glass plate 30 is measured in a similar manner to the method of measuring the damaged layer 20D of the glass plate 20.

In this respect, the width of the damaged layer 20D is herein referred to as width D. The width D represents a length (depth) of the damaged layer 20D in the in-plane direction. That is, denoting by a boundary surface 20D1 a boundary surface between the portion of the glass plate 20 other than the damaged layer 20D and the damaged layer 20D, the width D represents a distance from the cut surface 20C to the boundary surface 20D1 in the in-plane direction (the X direction in the example of FIG. 5). The width D can be measured by identifying the damaged layer 20D as described above.

The width D (µm) of the damaged layer 20D satisfies Formula (1) below and more preferably Formula (2) below. Note that the parameter t in Formulae (1) and (2) refers to the thickness t (µm) of the glass substrate 10, and can also be said to be the thickness of one glass substrate 10 cut along the imaginary line R, of the glass plate 20.$0.2 * t \leq D \leq 2000 μm$ (1) $0.2 * t + 100 μm \leq D \leq 2000 μm$ (2)

As shown in Formulae (1) and (2), the width D ranges from a value 0.2 times the thickness t to 2000 µm inclusive, and preferably ranges from a value 0.2 times the thickness t + 100 µm to 2000 µm inclusive.

By irradiating the glass preform 1 with the laser light L to allow the lower limit of the width D to fall within this range, the glass preform 1 can be melted to a sufficient degree by the laser light L, and the glass preform 1 can be cut appropriately. By irradiating the glass preform 1 with the laser light L to allow the upper limit of the width D of the damaged layer 20D to fall within this range, the thickness of grinding of the end surface can be reduced when the damaged layer 20D is removed by grinding in a subsequent process. This can reduce the grinding volume per unit area of the end surface, thereby enabling occurrence of chipping to be reduced or prevented.

Note that the width D of the damaged layer 30D of the glass plate 30 also preferably satisfies Formula (1) and more preferably Formula (2).

### (Cutting condition)

In the present production method, the width D can be limited to the above range by adjusting one or more cutting conditions with respect to the glass preform 1. Examples of the cutting conditions include at least one of the output power of the laser light L, the irradiation diameter (spot diameter) of the laser light L, the scanning speed of the laser light L (moving speed of the irradiation position of the laser light L), and the flow rate of the gas A (flow rate of the gas A to be jetted per unit time). The cutting conditions preferably include all of these. For example, the width D increases as the output power of the laser light L increases; the width D increases as the irradiation diameter of the laser light L increases; the width D increases as the scanning speed of the laser light L decreases; and the width D increases as the flow rate of the gas A decreases.

Note that the output power of the laser light L is preferably in a range from 10 W to 10000 W inclusive, more preferably in a range from 30 W to 7000 W inclusive, and still more preferably in a range from 50 W to 4000 W inclusive. The irradiation diameter of the laser light L is preferably in a range from 0.0005 mm to 3 mm inclusive, more preferably in a range from 0.001 mm to 2 mm inclusive, and still more preferably in a range from 0.01 mm to 1 mm inclusive. The scanning speed of the laser light L is preferably in a range from 6 mm/min to 3600 mm/min inclusive, more preferably in a range from 60 mm/min to 2400 mm/min inclusive, and still more preferably in a range from 200 mm/min to 1200 mm/min inclusive. The flow rate of the gas A is preferably in a range from 10 L/min to 900 L/min inclusive, more preferably in a range from 30 L/min to 700 L/min inclusive, and still more preferably in a range from 50 L/min to 500 L/min inclusive.

Limiting the cutting conditions to the above range enables the width D to be kept within an appropriate range, thereby enabling deterioration in quality to be reduced or prevented while appropriately cutting the glass preform 1.

### (Grinding)

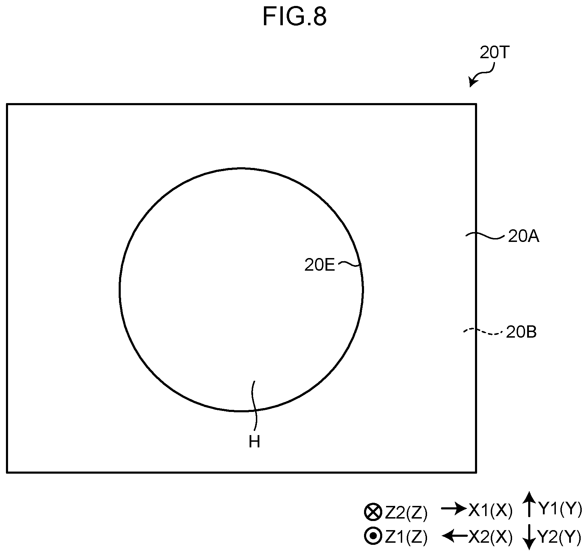

FIG. 7 is a schematic diagram for explaining grinding of the glass plate, and FIG. 8 is a schematic diagram of the glass article. In the present production method, the cut surface 20C of the glass plate 20 is ground using a grindstone W to obtain the glass article 20T as illustrated in FIG. 7. More specifically, the cut surface 20C of the glass plate 20 is ground using the grindstone W to remove the damaged layer 20D, and the glass plate 20 with the damaged layer 20D removed is obtained as the glass article 20T. That is, as illustrated in FIG. 8, the glass article 20T can be said to be a glass plate having the main surface 20A, the main surface 20B, and a ground surface 20E formed by grinding. In the present embodiment, the ground surface 20E is the surface surrounding the opening H of the glass article 20T.

The ground surface 20E of the glass article 20T may have any shape, but in the present embodiment, includes a side surface portion 20E1 and chamfered-or-rounded portions 20E2. The side surface portion 20E1 may be flat or curved. The chamfered portions 20E2 are each formed between the side surface portion 20E1 and one of the main surfaces (i.e., the main surface 20A or the main surface 20B) in the Z direction, and are each a chamfered or rounded surface connecting the side surface portion 20E1 and the main surface. The chamfered portions 20E2 are each oblique with respect to both the side surface portion 20E1 and the main surface (i.e., the main surface 10A or the main surface 10B) as viewed from a direction orthogonal to the Z direction (the Y direction in the example of FIG. 7). The chamfered portions 20E2 may be flat (that is, C-chamfered) or rounded (R-chamfered).

In the present embodiment, the ground surface 20E includes, as the chamfered portions 20E2, one of the chamfered portions 20E2 connecting the side surface portion 20E1 and the main surface 20A and another one of the chamfered portions 20E2 connecting the side surface portion 20E1 and the main surface 20B. However, the ground surface 20E may be formed to include either the one of the chamfered portions 20E2 connecting the side surface portion 20E1 and the main surface 20A or the another one of the chamfered portions 20E2 connecting the side surface portion 20E1 and the main surface 20B.

The cut surface 20C may be ground using the grindstone W in an arbitrary manner. For example, a grinding surface WA (the surface provided with abrasive grains) of the grindstone W is pressed against the cut surface 20C while the grindstone W is rotated about a rotation axis, which is a central axis along the axial direction of the grindstone W, under which condition the grindstone W is moved relative to the glass plate 20 along the cut surface 20C. As a result, the cut surface 20C is ground to form the ground surface 20E.

The feed speed of the grindstone W (relative moving speed of the grindstone W relative to the glass plate 20) may be arbitrary, but is preferably in a range from 200 mm/min to 3000 mm/min inclusive, more preferably in a range from 200 mm/min to 2000 mm/min inclusive, and still more preferably in a range from 200 mm/min to 1000 mm/min inclusive. Thus, the cut surface 20C can be appropriately ground.

The grindstone is desirably rotated in a direction to provide upward cutting. This facilitates removal of a glass melt generated during cutting and an intermediate layer 40 in a case of laminated glass, each adhering to the laser cut surface, and improves end surface quality after grinding.

The material of the abrasive grains provided on the grindstone W may be arbitrary. Examples of the material of the abrasive grains include single crystal diamond, cubic boron nitride, silicon carbide, and alumina, among which single crystal diamond is preferable.

The shape of the grindstone W is not particularly limited, and may be a cylindrical shape, a spherical shape, or the like. However, the grindstone W is preferably a formed grindstone including a first portion WA1 and second portions WA2 on the grinding surface WA. A formed grindstone is a grindstone having a grinding surface adapted to the shape of a target workpiece. The first portion WA1 is a portion having a grinding surface corresponding to the side surface portion 20E1. In other words, the first portion WA1 has a grinding surface for forming the side surface portion 20E1. The first portion WA1 has a columnar shape, and an outer circumferential surface thereof functions as a grinding surface. The second portions WA2 are portions having grinding surfaces respectively corresponding to the chamfered portions 20E2. In other words, the second portions WA2 have grinding surfaces for forming the chamfered portions 20E2. The second portions WA2 are connected to the first portion WA1 on the axial direction side, and each have a cone shape whose diameter increases with increasing distance from the first portion WA1. The outer circumferential surfaces thereof each function as a grinding surface. In the present embodiment, the grindstone W includes, as the second portions WA2, one of the second portions WA2 provided on one side of the first portion WA1 in the axial direction and another one of the second portions WA2 provided on the other side of the first portion WA1 in the axial direction.

The chamfered portions each have a width, for example, in a range from 0.05 mm to 0.5 mm inclusive, and preferably in a range from 0.1 mm to 0.3 mm inclusive.

A boundary portion between the grinding surface (outer circumferential surface) of the first portion WA1 and the grinding surface (outer circumferential surface) of each of the second portions WA2 is preferably R-shaped (rounded). The boundary portion has a radius of curvature that is preferably 0.05 mm or more, more preferably in a range from 0.1 mm to 0.5 mm inclusive, and still more preferably in a range from 0.2 mm to 0.3 mm inclusive. Falling within this range in terms of the radius of curvature of the boundary portion enables the boundary portion between the side surface portion 20E1 and each of the chamfered portions 20E2 obtained by grinding to have a radius of curvature in this range, and chipping to be more suitably reduced.

In the present embodiment, grinding is also preferably performed using a plurality of grindstones having different median diameters D50. Specifically, in the present embodiment, it is preferable to grind the cut surface 20C of the glass plate 20 using a first grindstone, and then to grind the cut surface 20C (the surface that has been ground using the first grindstone) using a second grindstone. The first grindstone is a grindstone having abrasive grains having a median diameter D50 in a range from 30 µm to 50 µm inclusive, in other words, a grinding member having on the surface thereof a plurality of abrasive grains having a median diameter D50 in a range from 30 µm to 50 µm inclusive. In addition, the second grindstone is a grindstone having abrasive grains having a median diameter D50 smaller than that of the first grindstone. The second grindstone is preferably a grindstone having abrasive grains having a median diameter D50 in a range from 10 µm to 25 µm inclusive, in other words, preferably a grinding member having on the surface thereof a plurality of abrasive grains having a median diameter D50 in a range from 10 µm to 25 µm inclusive. By grinding using such grindstones, the damaged layer 20D can be removed while reducing or preventing occurrence of chipping, and the quality can thus be appropriately improved.

Note that the median diameter D50 of the abrasive grains can be measured by a particle size distribution analyzer.

### (Effects)

As described above, the production method according to the present embodiment includes irradiation of the glass preform 1 with the laser light L to cause the width D of the damaged layer 20D to satisfy Formula (1) to thus cut the glass preform 1. The cut surface 20C of the glass plate 20 obtained by cutting is then ground to remove the damaged layer 20D, thereby obtaining the glass article 20T.

In this respect, when the glass preform 1 having a large thickness t of 0.4 mm or more is to be cut along a long imaginary line R having a long perimeter of 60 mm or more, it is required to efficiently obtain the glass article 20T having a desired shape while reducing or preventing deterioration in quality of a cut surface such as chipping. To this end, according to the present embodiment, the glass preform 1 is cut using the laser light L having a wavelength in the above range to allow the width D of the damaged layer 20D to fall within the above range. This enables reduction or prevention of deterioration in quality, such as chipping, of the ground surface 20E while appropriately cutting the glass preform 1. In addition, prevention of an excessively large width D of the damaged layer 20D can reduce the time of grinding using the grindstone W for removing the damaged layer 20D, and thus allows the glass article 20T having a desired shape to be efficiently obtained.

### (Modifications)

Modifications of the first embodiment will next be described. In the following description of the modifications, description of portions having a same configuration as that of the first embodiment will be omitted.

### (First Modification)

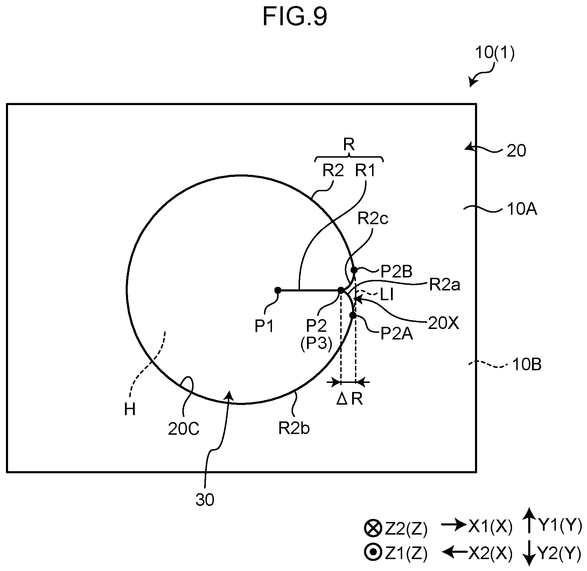

FIG. 9 is a schematic diagram illustrating the imaginary line according to a first modification. The imaginary line R in the present example has a shape having a closed curve similarly to the first embodiment, but has a different shape from the shape of the imaginary line R of the first embodiment. Specifically, the target shape to be hollowed out in the present example is similar to that of the first embodiment, but is different from that of the first embodiment in that the position of the imaginary line R is shifted with respect to the target shape.

As illustrated in FIG. 9, the imaginary line R of the present example includes the first section R1 and the second section R2 connected to the first section R1. The first section R1 of the present example is a section from the start point P1 of the imaginary line R to the intermediate point P2 of the imaginary line R. The second section R2 of the present example is a section from the intermediate point P2 through intermediate points P2A and P2B to the end point P3, which is the same position as the intermediate point P2. The trajectory from the intermediate point P2 through the intermediate points P2A and P2B to the end point P3 is a closed curve encircling the start point P1.

The intermediate point P2A is positioned farther from the start point P1 than the intermediate point P2 (at a position apart from the intermediate point P2 in the direction X1 in the example of FIG. 9), and is positioned at a position shifted from the intermediate point P2 in the direction Y (at a position apart from the intermediate point P2 in the direction Y2 in the example of FIG. 9). The intermediate point P2B is positioned farther from the start point P1 than the intermediate point P2 (at a position apart from the intermediate point P2 in the direction X1 in the example of FIG. 9), and is positioned at a position shifted from the intermediate point P2 in the direction Y (at a position apart from the intermediate point P2 in the direction Y1 in the example of FIG. 9). That is, the intermediate point P2 is positioned nearer to the start point P1 than an outer peripheral line LI (at a position apart from the intermediate point P2 in the direction X2 in the example of FIG. 9), where the outer peripheral line LI is a shortest line continuous to a section R2b from the intermediate point P2A to the intermediate point P2B in the second section R2 and connecting the intermediate point P2B and the intermediate point P2A. In other words, the intermediate point P2 can be said to be positioned at a position encircled by a closed curve including the section R2b and the outer peripheral line LI. The intermediate point P2 and the outer peripheral line LI have a distance ΔR therebetween that is preferably 3 mm or less, more preferably in a range from 0.2 mm to 2.5 mm inclusive, and still more preferably in a range from 0.5 mm to 1 mm inclusive.

In addition, a section R2a, which is a section from the intermediate point P2 to the intermediate point P2A in the second section R2, is continuously connected to the section R2b at the intermediate point P2A. Similarly, a section R2c, which is a section from the intermediate point P2B to the intermediate point P2 in the second section R2, is continuously connected to the section R2b at the intermediate point P2B.

Also in the present example, similarly to the first embodiment, irradiation with the laser light L along the imaginary line R causes separation of the glass preform 1 into the glass plate 30 enclosed by the imaginary line R and the glass plate 20 having the opening H, which is the portion enclosed by the imaginary line R. In the present example, the glass plate 20 has a shape in which a portion enclosed by the outer peripheral line LI and the sections R2a and R2c (which is a protruding portion 20X) protrudes, but the protruding portion 20X is preferably removed by grinding to produce the glass article 20T.

In this respect, a large residual thermal stress tends to remain in a portion near the end point P3 (the intermediate point P2). In contrast, setting the imaginary line R as described in the present example enables the protruding portion 20X to be left in a portion near the end point P3, and the protruding portion 20X can be removed by grinding. That is, in the present example, the grinding allowance in a portion near the end point P3 can be increased by the amount of removal of the protruding portion 20X. Therefore, according to the present example, the portion having a large residual thermal stress remaining can be reliably removed by grinding, thereby enabling occurrence of chipping to be suitably reduced or prevented, and the quality to thus be improved.

### (Second Modification)

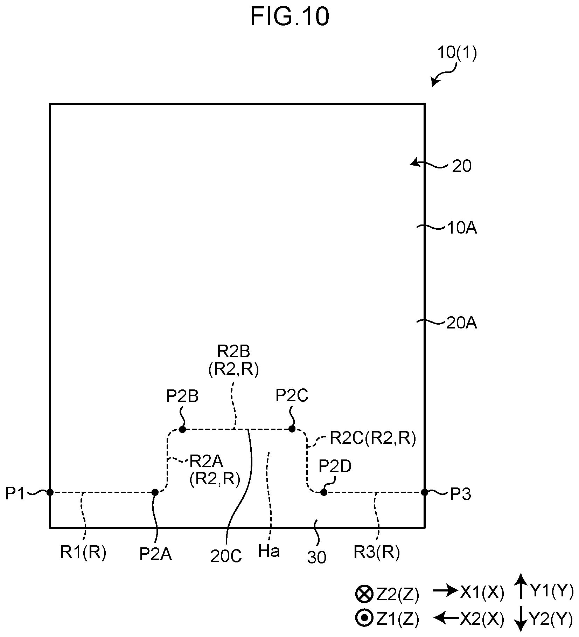

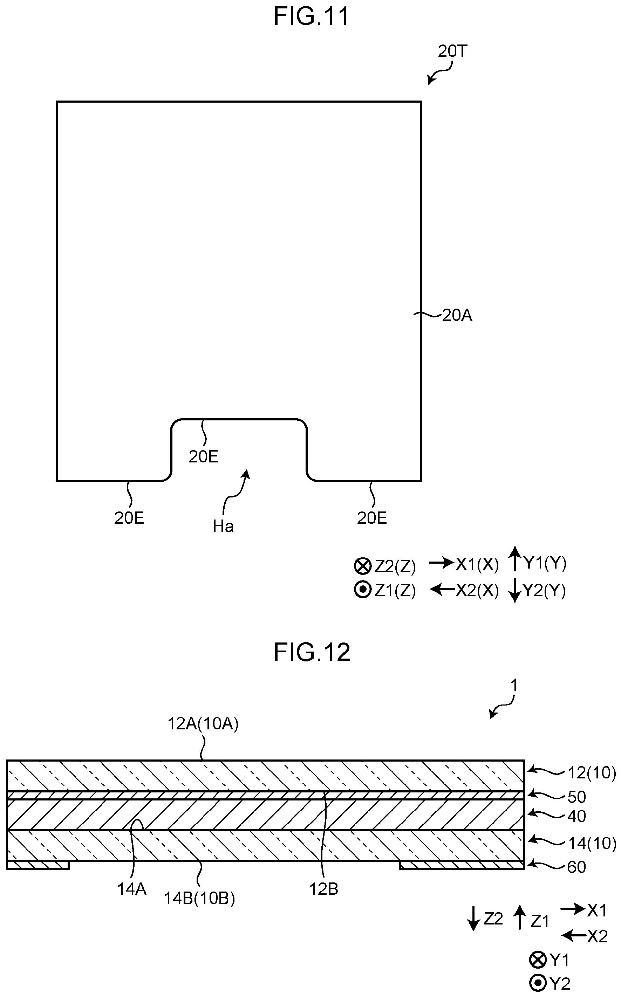

FIG. 10 is a schematic diagram illustrating the imaginary line according to a second modification, and FIG. 11 is a schematic diagram illustrating the glass article according to the second modification. The imaginary line R in the present example has, unlike the first embodiment, a shape having a concave trajectory instead of a shape having a closed curve.

The imaginary line R having a shape having a concave trajectory refers to a shape having the start point P1 and the end point P3 of the imaginary line R being positioned on end surfaces of the glass preform 1 (the end surfaces 10C of the glass substrate 10), and having a trajectory concave inward in the in-plane direction on the main surface 10A of the glass preform 1 (concave trajectory) at least in a certain section.

Specifically, the imaginary line R of the present example includes, as illustrated in FIG. 10, a first section R1, a second section R2, and a third section R3. Note that the imaginary line R of the present example also has a perimeter similar to the perimeter of the imaginary line R of the first embodiment.

The first section R1 is a section from the start point P1 of the imaginary line R to an intermediate point P2A of the imaginary line R. The start point P1 is positioned at a position connected to one of the end surfaces 10C on the main surface 10A (a position overlapping one of the end surfaces 10C as viewed from the Z direction), and the intermediate point P2A is positioned inward of that end surface 10C as viewed from the Z direction. In the example of FIG. 10, the start point P1 is positioned on a side of the main surface 10A in the direction X2, and the intermediate point P2A is positioned apart from the start point P1 in the direction X1. Therefore, in the example of FIG. 10, the first section R1 extends from the start point P1 to the intermediate point P2A in the direction X1.

The second section R2 is a section from the intermediate point P2A to an intermediate point P2D, and a trajectory from the intermediate point P2A to the intermediate point P2D is a concave trajectory concave inward in the in-plane direction (concave in the direction Y1 in the example of FIG. 10). In the example of FIG. 10, the second section R2 includes sections R2A, R2B, and R2C. The section R2A is a section extending inward in the in-plane direction (in the direction Y1 in the example of FIG. 10) from the intermediate point P2A to an intermediate point P2B. The section R2B is a section extending in a direction to cause intersection with the section R2A (in the direction X1 in the example of FIG. 10) from the intermediate point P2B to an intermediate point P2C. The section R2C is a section extending outward in the in-plane direction (in the direction Y2 in the example of FIG. 10) from the intermediate point P2C to the intermediate point P2D.

However, the shape of the second section R2 is not limited to the example of FIG. 10, and may be any shape concave inward in the in-plane direction.

The third section R3 is a section from the intermediate point P2D to the end point P3 of the imaginary line R. The end point P3 is positioned at a position connected to another one of the end surfaces 10C on the main surface 10A (a position overlapping another one of the end surfaces 10C as viewed from the Z direction). In the example of FIG. 10, the end point P3 is positioned on a side of the main surface 10A in the direction X1, and the third section R3 extends from the intermediate point P2D to the end point P3 in the direction X1.

Note that the shape of the imaginary line R in FIG. 10 is an example. For example, the start point P1 and the end point P3 are not limited to being positioned on the sides of the main surface 10A in the directions X1 and X2. For example, the start point P1 and the end point P3 may be positioned on a side of the main surface 10A in the direction Y2. In this case, the first section R1 extends from the start point P1 to the intermediate point P2A in the direction Y1, and the third section R3 extends from the intermediate point P2D to the end point P3 in the direction Y2.

Also in the present example, similarly to the first embodiment, irradiation with the laser light L along the imaginary line R causes the portion enclosed by the imaginary line R of the glass preform 1 to be separated. That is, in the present example, the glass preform 1 is separated into the glass plate 20 and the glass plate 30 along the imaginary line R. The glass plate 30 is a portion enclosed by the imaginary line R of the glass preform 1 separated along the imaginary line R (a portion enclosed by the imaginary line R and by the end surface 10C of the glass preform 1 in the direction Y2). The glass plate 20 is a portion other than the glass plate 30 of the glass preform 1 separated along the imaginary line R, and is a portion having a concave portion Ha concave inward in the in-plane direction, formed by the concave trajectory of the imaginary line R. That is, in the present example, the end surface forming the concave portion Ha of the glass plate 20 is the cut surface 20C.

Similarly to the first embodiment, irradiation with the laser light L also causes the damaged layer 20D to be formed on the cut surface 20C of the glass plate 20 in the present example. In the present example, the cut surface 20C of the glass plate 20 is also ground using the grindstone W to remove the damaged layer 20D, thereby obtaining the glass article 20T. That is, as illustrated in FIG. 11, the glass article 20T according to the present example has a shape having the concave portion Ha formed on the side in the direction Y2, and the end surface forming the concave portion Ha can be said to be the ground surface 20E.

As described in the present example, irradiation with the laser light L to cause the width D of the damaged layer 20D to fall within the above range allows the glass preform 1 to be cut appropriately, and the glass article 20T having a desired shape to be efficiently obtained while reducing or preventing deterioration in quality of the ground surface 20E also in the case of cutting along the imaginary line R having a concave trajectory.

### (Second Embodiment)

A second embodiment will next be described. The second embodiment is different from the first embodiment in that laminated glass including a plurality of glass substrates 10 is used as the glass preform 1. In the following description of the second embodiment, description of portions having a same configuration as that of the first embodiment will be omitted. Note that the second embodiment is also applicable to the modifications of the first embodiment.

### (Glass preform)

The glass preform 1 is, for example, a window member of a vehicle. FIG. 12 is a schematic cross-sectional view of the glass preform according to the second embodiment. As shown in FIG. 12, the glass preform 1 according to the second embodiment is laminated glass including a first glass substrate 12 serving as one of the glass substrates 10, a second glass substrate 14 serving as one of the glass substrates 10, and the intermediate layer 40 provided between the first glass substrate 12 and the second glass substrate 14 in the Z direction. In the glass preform 1, the first glass substrate 12, the intermediate layer 40, and the second glass substrate 14 are laminated in this order in the direction Z2. Thus, in the present embodiment, a main surface 12A disposed in the direction Z1, of the first glass substrate 12 is the main surface 10A of the glass preform 1, and a main surface 14B disposed in the direction Z2, of the second glass substrate 14 is the main surface 10B of the glass preform 1. In addition, a main surface 12B disposed in the direction Z2, of the first glass substrate 12 can be said to be a main surface of the first glass substrate 12 nearer to the intermediate layer 40, and a main surface 14A disposed in the direction Z1, of the second glass substrate 14 can be said to be a main surface of the second glass substrate 14 nearer to the intermediate layer 40.

In a case where the glass preform 1 is a window member of a vehicle, the first glass substrate 12 may be the glass substrate 10 on a vehicle exterior side, and the second glass substrate 14 may be the glass substrate 10 on a vehicle interior side. That is, in this case, the main surface 12A of the first glass substrate 12 (i.e., the main surface 10A) is a surface facing the outside of the vehicle, and the main surface 14B of the second glass substrate 14 (i.e., the main surface 10B) is a surface facing the inside of the vehicle.

Note that although the glass preform 1 according to the second embodiment is laminated glass including two glass substrates 10, which are the first glass substrate 12 and the second glass substrate 14, the number of the glass substrates 10 is not limited thereto and may be three or more.

In this respect, the thickness of the glass substrates 10 is defined as the thickness "t". The thickness t refers to the thickness of the glass preform 1 itself when the glass preform 1 includes one glass substrate 10, and refers to the thickness of one glass substrate 10 when the glass preform 1 includes a plurality of glass substrates 10.

The thickness t of the glass substrate 10 is 0.4 mm or more, preferably in a range from 1 mm to 5.0 mm inclusive, and more preferably in a range from 1.5 mm to 3.0 mm inclusive. Note that the thickness t refers to a length in the Z direction from the main surface 10A to the main surface 10B.

In the example of FIG. 12, the main surfaces 10A and 10B of the glass preform 1 (the glass substrates 10) each have a shape of a smooth flat plate. The shape is, however, not limited thereto. The flat plate may have a curved shape. That is, the main surfaces 10A and 10B of the glass preform 1 (the glass substrates 10) may each have a curved surface shape convex in the Z direction, and the main surfaces 10A and 10B may each have a curved surface shape convex in the direction Z1 (i.e., a shape convex toward the outside of the vehicle).

When the main surfaces 10A and 10B of the glass preform 1 (the glass substrates 10) each have a curved surface shape convex in the Z direction, the main surfaces 10A and 10B of the glass preform 1 (the glass substrates 10) each have a radius of curvature of preferably 300000 mm or less, more preferably 50000 mm or less, and still more preferably 30000 mm or less. When the main surfaces 10A and 10B of the glass preform 1 (the glass substrates 10) each have a curved surface shape convex in the Z direction, the main surfaces 10A and 10B of the glass preform 1 (the glass substrates 10) each have a radius of curvature of preferably 10 mm or more, more preferably 50 mm or more, still more preferably 100 mm or more, and even more preferably 200 mm or more. In other words, when the main surfaces 10A and 10B of the glass preform 1 (the glass substrates 10) each have a curved surface shape convex in the Z direction, the main surfaces 10A and 10B of the glass preform 1 (the glass substrates 10) each have a radius of curvature preferably in a range from 10 mm to 300000 mm inclusive, more preferably in a range from 50 mm to 50000 mm inclusive, still more preferably in a range from 100 mm to 30000 mm inclusive, and even more preferably in a range from 200 mm to 20000 mm inclusive.

In a case where the glass preform 1 is a window member of a vehicle, the glass preform 1 can be, for example, soda-lime glass, borosilicate glass, aluminosilicate glass, or the like.

The intermediate layer 40 is a film for bonding the first glass substrate 12 and the second glass substrate 14. A thermoplastic resin is often used as the intermediate layer 40, examples of which include thermoplastic resins that have been conventionally used in this type, such as a plasticized polyvinyl acetal-based resin, a plasticized polyvinyl chloride-based resin, a saturated polyester-based resin, a plasticized saturated polyester-based resin, a polyurethane-based resin, a plasticized polyurethane-based resin, an ethylene-vinyl acetate copolymer-based resin, an ethylene-ethyl acrylate copolymer-based resin, a cycloolefin polymer resin, and an ionomer resin.

The glass preform 1 may have a functional layer 50. The functional layer 50 is a member that imparts an additional function to the glass preform 1. The functional layer 50 includes, for example, at least one of a heating layer, a light control layer, a light-emitting display layer, and a solar cell layer, and is more preferably a heating layer. The heating layer is a film that generates heat when energized. The light control layer is a film capable of adjusting transmittance of visible light in response to an input. The light-emitting display layer is a film formed by arranging pixels including light-emitting elements, and can display an image by energization of each pixel. The term light emitting element includes an organic or inorganic electroluminescent (EL) element. The solar cell layer is a solar cell formed in a film shape that converts light energy into electric power.

The functional layer 50 is positioned between the first glass substrate 12 and the second glass substrate 14 in the Z direction (between the first glass substrate 12 and the intermediate layer 40 in the example of FIG. 12), but may be positioned at an arbitrary position. For example, the functional layer 50 may be provided on the main surface 12A of the first glass substrate 12 or on the main surface 14B of the second glass substrate 14.

Moreover, the glass preform 1 may have a shielding layer 60. The shielding layer 60 is an opaque layer. The shielding layer 60 is, for example, an opaque (e.g., black) colored ceramic layer. The shielding layer 60 may be a colored interlayer film or a colored film each having a light-shielding property, or a combination of such colored interlayer film and such colored ceramic layer. The colored film may be integrated with an infrared reflecting film or the like.

The shielding layer 60 can be formed by, but not limited to, for example, applying a ceramic color paste containing a meltable glass frit containing a black pigment onto a glass plate by screen printing or the like and then performing firing. The shielding layer 60 may be formed by, for example, applying an organic ink containing a black or dark pigment onto a glass plate by screen printing or the like and then drying the organic ink.

The shielding layer 60 is provided in a band shape along a peripheral edge portion of the glass preform 1 as viewed from the Z direction. The glass preform 1 blocks visible light in a region overlapping the shielding layer 60 in the Z direction, and transmits visible light in a region not overlapping the shielding layer 60 in the Z direction (a region surrounded by the shielding layer 60). In addition, the shielding layer 60 is positioned on the main surface 14B of the second glass substrate 14, but may be positioned at an arbitrary position in the Z direction. For example, the shielding layer 60 may be provided on the main surface 12A of the first glass substrate 12 or between the first glass substrate 12 and the second glass substrate 14.

### (Glass plate)

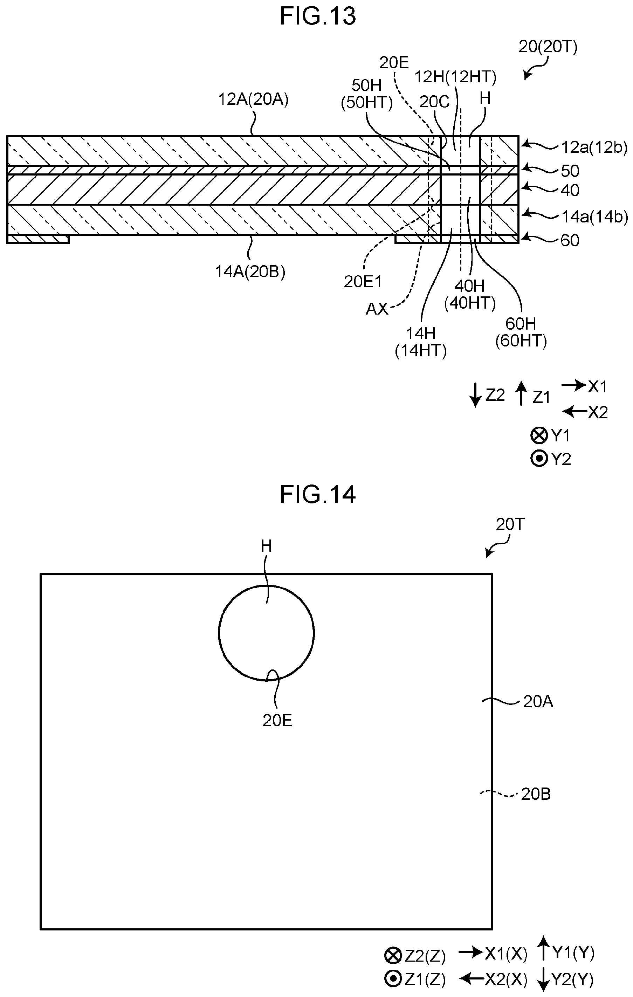

FIG. 13 is a schematic cross-sectional view of the glass plate in the second embodiment. Also in the second embodiment, similarly to the first embodiment, the imaginary line R is set on a main surface (e.g., the main surface 10A) of the glass preform 1, and the main surface is irradiated with the laser light L along the imaginary line R to cut the glass preform 1 to thus obtain the glass plate 20. In the present embodiment, the imaginary line R having a closed curve is set similarly to the first embodiment, and a portion enclosed by the imaginary line R is separated from the glass preform 1 by irradiation with the laser light L to obtain the glass plate 20. In the present embodiment, irradiation with the laser light L causes the layers of the glass preform 1 overlapping the imaginary line R as viewed from the Z direction (in the example of FIG. 13, the first glass substrate 12, the functional layer 50, the intermediate layer 40, the second glass substrate 14, and the shielding layer 60) to be cut along the imaginary line R to produce the glass plate 20. That is, the glass plate 20 of the present embodiment can be said to be laminated glass including the first glass substrate 12, the intermediate layer 40, and the second glass substrate 14, cut by irradiation with the laser light L (in the example of FIG. 13, laminated glass including the first glass substrate 12, the functional layer 50, the intermediate layer 40, the second glass substrate 14, and the shielding layer 60, cut by irradiation with the laser light L). In the glass plate 20, the first glass substrate 12 cut by irradiation with the laser light L is hereinafter referred to as first glass plate 12a, and the second glass substrate 14 cut by irradiation with the laser light L is hereinafter referred to as second glass plate 14a.

In the present embodiment, the glass preform 1 is cut along the imaginary line R having a closed curve similarly to the first embodiment, thereby causing the glass plate 20 to have a shape having the opening H formed in the portion enclosed by the imaginary line R. In addition, the end surface surrounding the opening H of the glass plate 20 can be said to be the cut surface 20C. That is, in the present embodiment, cutting by irradiation with the laser light L causes an opening 12H to be formed in the first glass plate 12a, an opening 40H to be formed in the intermediate layer 40, an opening 14H to be formed in the second glass plate 14a, an opening 50H to be formed in the functional layer 50, and an opening 60H to be formed in the shielding layer 60. In the present embodiment, it can be said that the opening H includes the opening 12H of the first glass plate 12a, the opening 40H of the intermediate layer 40, and the opening 14H of the second glass plate 14a (in the example of FIG. 13, the opening 12H, the opening 50H of the functional layer 50, the opening 40H, the opening 14H, and the opening 60H of the shielding layer 60).

In the present embodiment, the opening 12H, the opening 40H, and the opening 14H (in the example of FIG. 13, the opening 12H, the opening 50H, the opening 40H, the opening 14H, and the opening 60H) overlap each other as viewed from the Z direction. In other words, these openings communicate with each other. It can be said that the opening H of the present embodiment is formed in such a manner that these openings communicate with each other in the Z direction.

In the present embodiment, the damaged layer 20D is also formed on the cut surface 20C of the glass plate 20 (i.e., the cut surfaces of the first glass substrate 12 and of the second glass substrate 14).

### (Glass article)

FIG. 14 is a schematic top view of the glass article according to the second embodiment. In the present embodiment, the cut surface 20C of each layer of the glass plate 20 is also ground using the grindstone W to remove the damaged layer 20D, thereby obtaining the glass article 20T. That is, as illustrated in FIGS. 13 and 14, the glass article 20T according to the present embodiment has a shape having the opening H formed therein. As illustrated in FIG. 13, the end surface surrounding the opening H of the glass article 20T can be said to be the ground surface 20E.

In the glass article 20T, the first glass plate 12a with the damaged layer 20D removed by grinding is hereinafter referred to as first glass article 12b, and the second glass plate 14a with the damaged layer 20D removed by grinding is hereinafter referred to as second glass article 14b.

Note that, similarly to the first embodiment, the glass article 20T (the first glass article 12b and the second glass article 14b) may have a flat plate shape, but may also have a curved surface shape convex in the direction Z1 (i.e., a shape convex toward the outside of the vehicle).

### (Opening)

In this respect, the opening 12H of the first glass article 12b having the cut surface thereof (the outer circumferential surface of the opening 12H) that has been ground is referred to as opening 12HT. In addition, the opening 14H of the second glass article 14b having the cut surface thereof (the outer circumferential surface of the opening 14H) that has been ground is referred to as opening 14HT. Moreover, the opening 40H of the intermediate layer 40 having the cut surface thereof (the outer circumferential surface of the opening 40H) that has been ground is referred to as opening 40HT. In addition, the opening 50H of the functional layer 50 having the cut surface thereof (the outer circumferential surface of the opening 50H) that has been ground is referred to as opening 50HT. Moreover, the opening 60H of the shielding layer 60 having the cut surface thereof (the outer circumferential surface of the opening 60H) that has been ground is referred to as opening 60HT.

In this case, it can be said that the opening H of the glass article 20T includes the opening 12HT, the opening 40HT, and the opening 14HT (in the example of FIG. 13, the opening 12HT, the opening 50HT, the opening 40HT, the opening 14HT, and the opening 60HT).

In the present embodiment, the opening 12HT, the opening 40HT, and the opening 14HT (in the example of FIG. 13, the opening 12HT, the opening 50HT, the opening 40HT, the opening 14HT, and the opening 60HT) overlap each other as viewed from the Z direction. In other words, these openings communicate with each other. It can be said that the opening H of the glass article 20T is formed in such a manner that these openings communicate with each other in the Z direction.

These openings (i.e., the opening H, the opening 12HT, the opening 50HT, the opening 40HT, the opening 14HT, and the opening 60HT) are formed by cutting along the imaginary line R. The perimeter of these openings is accordingly, similarly to the perimeter of the imaginary line R, also 60 mm or more, preferably in a range from 80 mm to 2000 mm inclusive, and more preferably in a range from 100 mm to 1000 mm inclusive. The perimeter of an opening herein refers to the entire length of the peripheral edge of the opening when viewed from the Z direction.

In addition, as viewed from the Z direction, the peripheral edges of these openings (i.e., the opening H, the opening 12HT, the opening 50HT, the opening 40HT, the opening 14HT, and the opening 60HT) each have a minimum radius of curvature of preferably 5 mm or more, preferably in a range from 7 mm to 200 mm inclusive, and more preferably in a range from 10 mm to 100 mm inclusive.

Setting the size and shape of the openings to these values allows a member to be appropriately inserted into the openings. The member to be inserted into the openings may be any member, but may be a transmissive member that transmits infrared light. The transmissive member may be any member, and is preferably, for example, a member that transmits far infrared light, and preferably a member including a base material mainly composed of at least one selected from the group consisting of silicon (Si), germanium (Ge), zinc sulfide (ZnS), zinc selenide (ZnSe), and chalcogenide glass.

In addition, each of these openings (i.e., the opening H, the opening 12HT, the opening 50HT, the opening 40HT, the opening 14HT, and the opening 60HT) has a shape in which an inscribed circle of that opening and an end portion of that opening are apart from each other by a distance of preferably 1 mm or more. The term "end portion of an opening" as used herein refers to a point farthest from the inscribed circle of the opening among the points on the entire circumference of the opening when viewed from the axial direction of the opening (Z direction in this example). That is, this means here that the shape of each of the openings is preferably not a perfect circle but a shape whose width in one direction of that opening is longer than the widths in other directions (e.g., an ellipse or a rectangle). Use of such shape for the openings enables a field of view (FOV) of a sensor to have a longer length in a longer axis direction (one direction of the longer width), thereby enabling the sensor to suitably perform detection.

In addition, although one opening H is formed in the glass article 20T in the present embodiment, the number of openings H to be formed in the glass article 20T is arbitrary, and two or more openings H may be formed. That is, for example, a plurality of openings 12HT may be formed in the first glass substrate 12, and a plurality of openings 14HT may be formed in the second glass substrate 14.

### (Misalignment amount of Opening)

The end surface of the opening 12HT and the end surface of the opening 14HT are misaligned with each other as viewed from the Z direction by an amount of misalignment of 100 µm or less, more preferably 70 µm or less, and still more preferably 50 µm or less. Falling within this range in terms of the amount of misalignment between the end surfaces enables a small misalignment to be achieved between the openings as viewed from the Z direction, thereby enabling deterioration in quality to be reduced or prevented from a dimensional viewpoint. For example, a small misalignment between the openings allows, for example, a member to be appropriately inserted into the opening H.

The phrase "amount of misalignment between the end surfaces" herein refers to a distance between a predetermined point on the peripheral edge of one opening (here, the opening 12HT) and a predetermined point on the peripheral edge of another opening (here, the opening 14HT) as viewed from the Z direction. The predetermined points as used herein each refer to a point of a same relative position with respect to the center of that opening among the points on the peripheral edge of that opening. That is, for example, when the predetermined point of the opening 12HT is a point on the peripheral edge in the direction X1 with respect to the center of the opening 12HT, the predetermined point of the opening 14HT is a point on the peripheral edge in the direction X1 with respect to the center of the opening 14HT. The amount of misalignment between the end surfaces may alternatively refer to a distance between the center point of one opening and the center point of another opening.

Although the foregoing has described the amount of misalignment between the end surface of the opening 12HT and the end surface of the opening 40HT, the amount of misalignment between the end surfaces of another pair of two openings is also preferably within the above range. That is, it is preferable that, for example, the amount of misalignment between the end surface of the opening 12HT and the end surface of the opening 40HT, and the amount of misalignment between the end surface of the opening 14HT and the end surface of the opening 40HT also fall within the above range. In the present embodiment, glass having a structure of laminated glass is irradiated with the laser light L to form an opening in each layer at a time, thereby enabling the amount of misalignment between the openings to be reduced. In addition, in the present embodiment, the outer circumferential surfaces of the openings of the respective layers are simultaneously ground, thereby enabling the amount of misalignment between the openings to be reduced. As a result, a member can be appropriately inserted into the opening H.

### (Inclination angle of Opening)

In the example of FIG. 13, the end surfaces (i.e., the ground surfaces) of these openings (i.e., the opening H, the opening 12HT, the opening 50HT, the opening 40HT, the opening 14HT, and the opening 60HT) are along a normal AX of the main surface 20A of the glass article 20T, but the present invention is not limited thereto. The end surfaces (the ground surface 20E) of these openings each have an inclination angle with respect to the normal AX of the main surface 20A of preferably 70° or less, more preferably in a range from 0° to 60° inclusive, and still more preferably in a range from 0° to 45° inclusive. Note that the phrase "end surface of an opening" as used herein refers to the polished surface 20E, and when chamfered portions (chamfered portions 12E2 and 13E2) are formed in the opening 12HT and in the opening 14HT as described later, the above phrase refers to portions (side surface portions 12E1 and 14E1) excluding those chamfered portions. In addition, the normal AX of the main surface 20A as used herein may refer to the normal AX of the main surface 20A at the boundary position between the end surface of each of the openings and the main surface 20A. Falling within this range in terms of the inclination angles of the end surfaces enables the openings to be directed in an appropriate direction also when, for example, the glass article 20T is attached in a vehicle with an inclination.

### (Chamfered portion of Peripheral edge of Opening)

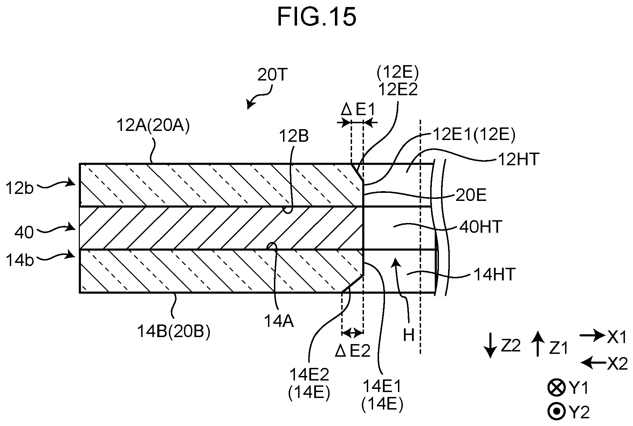

FIG. 15 is a schematic cross-sectional view of the glass article according to the second embodiment. Although FIG. 15 omits the functional layer 50 and the shielding layer 60 for convenience of illustration, the functional layer 50 and the shielding layer 60 may be provided. Note that the glass article 20T has a shape having the openings (i.e., the opening H, the opening 12HT, the opening 50HT, the opening 40HT, the opening 14HT, and the opening 60HT) having been hollowed out. The cross-sectional view of the glass article 20T illustrated in FIG. 15 is a view that visualizes the side surfaces on the side in the direction into the paper (indicated by solid lines).

As illustrated in FIG. 15, it is preferable that, in the second embodiment, the first glass article 12b has a chamfered portion 12E2 formed in a portion of the peripheral edge of the opening 12HT nearer to the main surface 12A, and has no chamfered portion formed in a portion of the peripheral edge of the opening 12HT nearer to the main surface 12B. That is, denoting by an end surface 12E the end surface (ground surface) surrounding the opening 12HT of the first glass article 12b, the end surface 12E includes a side surface portion 12E1 and the chamfered portion 12E2. The chamfered portion 12E2 is formed between the side surface portion 12E1 and the main surface 12A in the Z direction, and is a chamfered surface connecting the side surface portion 12E1 and the main surface 12A. The chamfered portion 12E2 is oblique with respect to both the side surface portion 12E1 and the main surface 12A when viewed from a direction orthogonal to the Z direction (the Y direction in the example of FIG. 15). The chamfered portion 12E2 may be flat (that is, C-chamfered) or rounded (R-chamfered).

In contrast, the first glass article 12b has no chamfered portion formed between the side surface portion 12E1 and the main surface 12B. The phrase "no chamfered portion is (being) formed" may mean that the distance between the boundary point between the main surface 12B and the surface intersecting the main surface 12B and the boundary point between the side surface portion 12E1 and the surface intersecting the side surface portion 12E1 is 50 µm or less when viewed from a direction orthogonal to the Z direction (the Y direction in the example of FIG. 15). That is, for example, in the example of FIG. 15, the side surface portion 12E1 and the main surface 12B are directly connected to each other, and accordingly, the boundary point between the main surface 12B and the surface intersecting the main surface 12B (i.e., the side surface portion 12E1) and the boundary point between the side surface portion 12E1 and the surface intersecting the side surface portion 12E1 (i.e., the main surface 12B) coincide with each other. The distance therebetween is therefore 0 µm.

In addition, it is preferable that, in the second embodiment, the second glass article 14b has a chamfered portion 14E2 formed in a portion of the peripheral edge of the opening 14HT nearer to the main surface 14B, and has no chamfered portion formed in a portion of the peripheral edge of the opening 14HT nearer to the main surface 14A. That is, denoting by an end surface 14E the end surface (ground surface) surrounding the opening 14HT of the second glass article 14b, the end surface 14E includes a side surface portion 14E1 and the chamfered portion 14E2. The chamfered portion 14E2 is formed between the side surface portion 14E1 and the main surface 14B in the Z direction, and is a chamfered surface connecting the side surface portion 14E1 and the main surface 14B. The chamfered portion 14E2 is oblique with respect to both the side surface portion 14E1 and the main surface 14B when viewed from a direction orthogonal to the Z direction (the Y direction in the example of FIG. 15). The chamfered portion 14E2 may be flat (that is, C-chamfered) or rounded (R-chamfered).

In contrast, the second glass article 14b has no chamfered portion formed between the side surface portion 14E1 and the main surface 14A.

As described above, no chamfered portions are formed on the peripheral edges of the openings 12HT and 14HT of the first glass article 12b and of the second glass article 14b on the intermediate layer 40 side, thereby enabling the first glass article 12b (or the second glass article 14b) and the intermediate layer 40 to be brought into contact with each other in a larger area, and the first glass article 12b (or the second glass article 14b) and the intermediate layer 40 to adhere to each other with higher adhesive force. Meanwhile, formation of the chamfered portion on the peripheral edge of each of the openings 12HT and 14HT on the side opposite to the intermediate layer 40 allows a member to be appropriately inserted. In the present embodiment, the outer circumferential surfaces of the openings of the respective layers are simultaneously ground, thereby enabling chamfered portions to be formed on the sides of the main surfaces 12A and 14B, and no chamfered portions to be formed on the sides of the main surfaces 12B and 14A.

In addition, the chamfered portion 12E2 of the first glass article 12b on the main surface 12A side has a width ΔE1 preferably smaller than a width of the chamfered portion 14E2 of the second glass article 14b on the main surface 14B side. As a result, the width ΔE1 of the chamfered portion 12E2 on the vehicle exterior side can be kept small, thereby enabling the glass article to be suitably used as an in-vehicle window member. Note that the width ΔE1 is the length of the chamfered portion 12E2 as viewed from a direction orthogonal to the Z direction. For example, in the example of FIG. 15, the width ΔE1 represents a distance in the X direction from the boundary position between the main surface 12A and the chamfered portion 12E2 to the boundary position between the side surface portion 12E1 and the chamfered portion 12E2. A similar description applies to a width ΔE2.

The width ΔE1 is preferably 0.5 mm or less. Use of the small width of the chamfered portion on the vehicle exterior side as described above allows the glass article to be suitably used as an in-vehicle window member.

### (Grindstone)

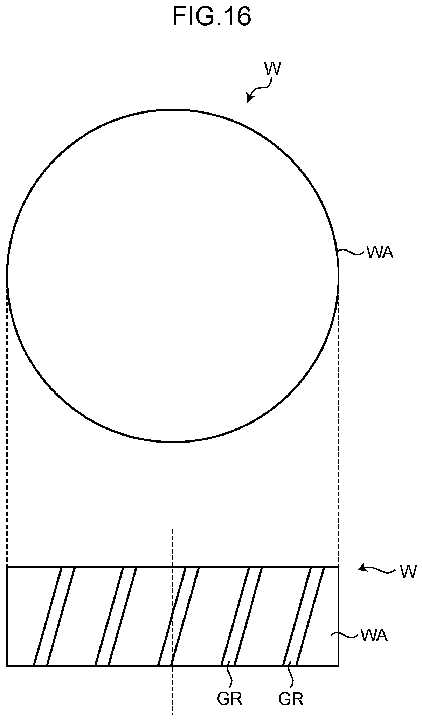

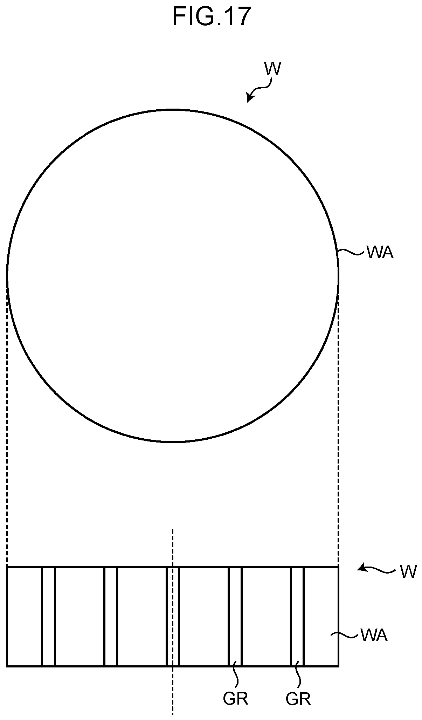

FIGS. 16 and 17 are each a schematic diagram of the grindstone in the second embodiment. The grindstone W for grinding the cut surface 20C of each layer of the glass plate 20 may have an arbitrary structure, but in the second embodiment, a structure of the grindstone W is preferably devised in view of grinding also the intermediate layer 40. Specifically, as illustrated in FIGS. 16 and 17, the grindstone W used in the second embodiment preferably has a disk shape whose outer circumferential surface is the grinding surface WA, and preferably has a plurality of grooves GR formed in circumferential arrangement on the outer circumferential surface (the grinding surface WA). That is, the grindstone W is provided with a plurality of abrasive grains at positions where none of the grooves GR on the grinding surface WA is formed. Use of such grindstone W enables the intermediate layer 40 to be appropriately scraped off by the grinding surface WA and by the grooves GR, thereby enabling each of the layers of the glass plate 20 to be suitably ground. Note that the grooves GR may extend in a direction inclined with respect to the rotation axis of the grindstone W as illustrated in FIG. 16, or may extend along the rotation axis of the grindstone W as illustrated in FIG. 17.

### (Modification of Second Embodiment)

In the second embodiment, the glass preform 1 may be used for, for example, cover glass of an in-vehicle sensor. When the glass article 20T is used as cover glass of an in-vehicle sensor, the glass article may be one used as cover glass of a LiDAR or of a camera. The cover glass of an in-vehicle sensor is formed of a material that transmits near infrared light having a wavelength in a range from 750 nm to 1650 nm, having the following composition in mol% based on the amounts of oxides, by way of example.
55% to 85% SiO₂
0% to 30% Al₂O₃
0% to 20% B₂O₃
0% to 25% Na₂O
0% to 20% CaO
0% to 15% MgO
0% to 20% K₂O
0% to 20% BaO.

As described above, forming the opening in the cover glass of an in-vehicle sensor using the method of the present embodiment enables, for example, a member that transmits far infrared light having a wavelength in a range from 8 µm to 14 µm to be inserted into the opening, and thus enables a far infrared transmitting camera to be installed in combination.

### (Effects)

As described above, a production method according to a first aspect of the present disclosure includes setting the imaginary line R on the main surface 10A of the glass preform 1 including the glass substrate 10 having a thickness of 0.4 mm or more; obtaining the glass plate 20 by irradiating the glass preform 1 with the laser light L having a wavelength in a range from 9.1 µm to 10.8 µm inclusive along the imaginary line R to cut the glass preform 1 along the imaginary line R, and separating a portion enclosed by the imaginary line R from the glass preform 1; and obtaining the glass article 20T by grinding the cut surface 20C of the glass plate 20 using the grindstone W, wherein the imaginary line R has a shape having the start point P1 and the end point P3 being positioned on the end surfaces 10C of the glass preform 1, the shape having a trajectory concave inward in the in-plane direction of the main surface 10A of the glass preform 1, or has a shape having a closed curve, the imaginary line R has a perimeter of 60 mm or more, the damaged layer 20D is formed on the cut surface 20C of the glass plate 20 by cutting the glass preform 1 by irradiation with the laser light L, and the damaged layer 20D has the width D satisfying Formula (1), and the damaged layer 20D is removed by grinding using the grindstone W.

According to the present disclosure, the glass preform 1 is cut using the laser light L having a wavelength in the above range to cause the width D of the damaged layer 20D to fall within the range of Formula (1). This enables reduction or prevention of deterioration in quality, such as chipping, of the ground surface 20E while appropriately cutting the glass preform 1. In addition, prevention of an excessively large width D of the damaged layer 20D can reduce the time of grinding using the grindstone W for removing the damaged layer 20D, and thus allows the glass article 20T having a desired shape to be efficiently obtained.

A production method according to a second aspect of the present disclosure is the production method according to the first aspect, wherein the width D of the damaged layer 20D preferably satisfies Formula (2). Limiting the width D to this range enables the glass article 20T to be efficiently obtained while reducing or preventing deterioration in quality.

A production method according to a third aspect of the present disclosure is the production method according to the first aspect or the second aspect, wherein the imaginary line R preferably includes the first section R1 from the start point P1 to the intermediate point P2 and the second section R2, which passes through a trajectory encircling the start point P1 and returns to the intermediate point P2 (the end point P3). By setting the imaginary line R in this manner, the glass article 20T having the opening H formed therein can be appropriately produced.

A production method according to a fourth aspect of the present disclosure is the production method according to the third aspect, wherein the first section R1 and the second section R2 are preferably connected to each other continuously. Setting the imaginary line R in this manner can reduce or prevent occurrence of residual thermal stress due to irradiation energy fluctuation in the vicinity of the intermediate point P2, and can thus improve quality.

A production method according to a fifth aspect of the present disclosure is the production method according to the third aspect or the fourth aspect, wherein it is preferable that the reserved imaginary line RA is further set, which is connected to the second section R2 of the imaginary line R and extends to the point P4 positioned at a position different from the end point P3 of the second section R2 when the imaginary line R is set, that in the first section R1 and in the second section R2 of the imaginary line R, the irradiation position of the laser light is moved relative to the glass preform 1 along the imaginary line R while irradiation with the laser light L is performed, and that in a section where the reserved imaginary line RA is set, the irradiation position is moved relative to the glass preform 1 along the reserved imaginary line RA while the irradiation with the laser light is stopped. Setting the reserved imaginary line RA in this manner can reduce or prevent occurrence of residual thermal stress due to irradiation energy fluctuation in the vicinity of the intermediate point P2 (the end point P3), and can thus improve quality.

A production method according to a sixth aspect of the present disclosure is the production method according to any one of the first to fifth aspects, wherein the glass preform 1 preferably has a curved portion. According to the present disclosure, the glass article 20T can be appropriately obtained from the glass preform 1 having the curved portion.

A production method according to a seventh aspect of the present disclosure is the production method according to any one of the first to sixth aspects, wherein the glass preform 1 is preferably laminated glass including the first glass substrate 12, the second glass substrate 14, and the intermediate layer 40 provided between the first glass substrate 12 and the second glass substrate 14. According to the present disclosure, the glass article 20T can be appropriately obtained from laminated glass.

A production method according to an eighth aspect of the present disclosure is the production method according to the seventh aspect, wherein the grindstone W preferably has a disk shape whose outer circumferential surface serves as the grinding surface WA, and preferably has the plurality of grooves GR formed to be circumferentially arranged on the outer circumferential surface. According to the present disclosure, use of such grindstone W enables the intermediate layer 40 to be appropriately scraped off, and the glass article 20T to be appropriately obtained from laminated glass.

A production method according to a ninth aspect of the present disclosure is the production method according to any one of the first to eighth aspects, wherein it is preferable that when the cut surface 20C of the glass plate 20 is ground using the grindstone W, that the cut surface 20C is ground using a first grindstone having abrasive grains having the median diameter D50 in a range from 30 µm to 50 µm inclusive, and that the cut surface 20C is then ground using a second grindstone having abrasive grains having the median diameter D50 in a range from 10 µm to 25 µm inclusive. According to the present disclosure, performing grinding in multiple steps using grindstones having abrasive grains having different diameters as described above can reduce or prevent deterioration in quality, such as chipping, of the ground surface 20E.

A production method according to a tenth aspect of the present disclosure is the production method according to any one of the first to ninth aspects, wherein when the cut surface 20C of the glass plate 20 is ground using the grindstone W, the grindstone W is fed at a feed speed preferably in a range from 200 mm/min to 3000 mm/min inclusive.

A glass article 20T according to an eleventh aspect of the present disclosure includes the first glass article 12b having the thickness t of 0.4 mm or more, the second glass article 14b having the thickness t of 0.4 mm or more, and the intermediate layer 40 provided between the first glass article 12b and the second glass article 14b. The openings 12HT and 14HT each having a perimeter of 60 mm or more are formed in the first glass article 12b and in the second glass article 14b. The opening 12HT of the first glass article 12b and the opening 14HT of the second glass article 14b overlap each other as viewed from a thickness direction of the glass article 20T (i.e., the Z direction). An end surface of the opening 12HT and an end surface of the opening 14HT are misaligned with each other by an amount of misalignment of 100 µm or less in an in-plane direction of the glass article 20T. According to the present disclosure, falling within this range in terms of the amount of misalignment between the end surfaces enables a small misalignment to be achieved between the openings as viewed from the Z direction, thereby enabling deterioration in quality to be reduced or prevented from a dimensional viewpoint.

A glass article 20T according to a twelfth aspect of the present disclosure is the glass article 20T according to the eleventh aspect, wherein it is preferable that the first glass article 12b has the chamfered portion 12E2 formed in a portion of the peripheral edge of the opening 12HT nearer to the main surface 12A opposite the intermediate layer 40, and has no chamfered portion formed in a portion of the peripheral edge of the opening 12HT nearer to the main surface 12B opposite the main surface 12A, and that the second glass article 14b has the chamfered portion 14E2 formed in a portion of the peripheral edge of the opening 14HT nearer to the main surface 14B opposite the intermediate layer 40, and has no chamfered portion formed in a portion of the peripheral edge of the opening 14HT nearer to the main surface 14A opposite the main surface 14B. This enables the first glass article 12b (or the second glass article 14b) and the intermediate layer 40 to be brought into contact with each other in a larger area, thereby enabling the first glass article 12b (or the second glass article 14b) and the intermediate layer 40 to be appropriately bonded to each other.

A glass article 20T according to a thirteenth aspect of the present disclosure is the glass article 20T according to the twelfth aspect, wherein it is preferable that the first glass article 12b and the second glass article 14b are curved to be convex in the direction Z1 (first direction), and that the chamfered portion 12E2 of the opening 12HT in the portion nearer to the main surface 12A of the first glass article 12b has the width ΔE1 smaller than the width ΔE2 of the chamfered portion 14E2 of the opening 14HT in the portion nearer to the main surface 14B of the second glass article 14b. Thus, the glass article 20T can be suitably used as an in-vehicle window member.

A glass article 20T according to a fourteenth aspect of the present disclosure is the glass article 20T according to any one of the eleventh to thirteenth aspects, and preferably further includes the shielding layer 60, which is provided at a position overlapping the first glass article 12b and the second glass article 14b as viewed from the Z direction and blocks light, and the shielding layer 60 preferably has the opening 60HT formed to overlap the openings 12HT and 14HT. Providing the shielding layer 60 and forming the opening 60HT in the shielding layer 60 as described above allows the glass article to be suitably used as an in-vehicle window member.

A glass article 20T according to a fifteenth aspect of the present disclosure is the glass article 20T according to any one of the eleventh to fourteenth aspects, and preferably further includes a heating layer (the functional layer 50) that is provided at a position overlapping the first glass article 12b and the second glass article 14b as viewed from the Z direction and generates heat, and the heating layer preferably has the opening 50HT formed to overlap the openings 12HT and 14HT. Providing the heating layer and forming the opening 50HT in the heating layer as described above allows the glass article to be suitably used as an in-vehicle window member.

A glass article 20T according to a sixteenth aspect of the present disclosure is the glass article 20T according to any one of the eleventh to fifteenth aspects, wherein the end surface of the opening 12HT of the first glass article 12b has an inclination angle of 70° or less with respect to the normal AX of the main surface 20A of the glass article 20T, and the end surface of the opening 14HT of the second glass article 14b has an inclination angle of 70° or less with respect to the normal AX of the main surface 20A of the glass article 20T. This enables the openings to be directed in an appropriate direction also when, for example, the glass article 20T is attached in a vehicle with an inclination.

A glass article 20T according to a seventeenth aspect of the present disclosure is the glass article 20T according to any one of the eleventh to sixteenth aspects, where each of the opening 12HT of the first glass article 12b and the opening 14HT of the second glass article 14b has a shape in which an inscribed circle of that opening and an end portion of that opening are apart from each other by a distance of preferably 1 mm or more. Use of such shape for the openings enables a field of view (FOV) of a sensor to have a longer length in a longer axis direction (one direction of the longer width), thereby enabling the sensor to suitably perform detection.

A glass article 20T according to an eighteenth aspect of the present disclosure is the glass article 20T according to any one of the eleventh to seventeenth aspects, wherein the glass article 20T preferably has a curved portion. As a result, the glass article 20T can be used in various applications requiring a curved portion.

A glass article 20T according to a nineteenth aspect of the present disclosure is the glass article 20T according to any one of the eleventh to eighteenth aspects, wherein the glass article 20T is preferably used as a windshield of a vehicle or as cover glass of an in-vehicle sensor. The glass article 20T of the present disclosure can be appropriately used in these applications.

### (Examples)

Examples will next be described. Tables 1 and 2 are tables showing production conditions and evaluation results of each example.

**(Table 1)**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Glass material | | | DT | | | | | | | | | |
| Perimeter of imaginary line (mm) | | | 283 | | | | | | | | | |
| Shape of imaginary line | | | Quadrangle: 50 × 100 mm, R: 10 mm | | | | | | | | | |
| Cutting out means | | | Laser light | | | | | | | | | Grindstone |
| Cutting condition | | Laser power [W] | 200 | 5 | 200 | 200 | 6 | 200 | 200 | 400 | 400 | Tool: ø10 |
| | | Scanning speed [mm/min] | 1200 | 1200 | 600 | 600 | 1200 | 600 | 600 | 400 | 400 | Rotational frequency:20000 rpm |
| | | Irradiation diameter [mm] | 0.2 | 0.2 | 0.1 | 0.1 | 0.2 | 0.1 | 0.1 | 1 | 2 | Feed speed: 200 mm/min |
| | | Air flow rate [L/min] | 116 | 5 | 109.9 | 182.5 | 5 | 109.9 | 182.5 | 182.5 | 182.5 | |
| | | Thickness t [mm] | 0.4 | 0.7 | 1.3 | 1.3 | 1.3 | 2 | 2 | 2 | 2 | 2 |
| Width D of damaged layer (µm) | | | 189 | 68 | 432 | 459 | 128 | 631 | 713 | 1500 | 2100 | 700 |
| Cut-out achievement result | | | ○ | × | ○ | ○ | × | ○ | ○ | ○ | ○ | ○ |
| Chamfering condition | First grinding | Grit number of grindstone | SD400P | - | SD400P | SD400P | - | SD400P | SD400P | SD400P | SD400P | SD400P |
| | | Median diameter D50 (µm) | 37.9 | - | 37.9 | 37.9 | - | 37.9 | 37.9 | 37.9 | 37.9 | 37.9 |
| | | Feed speed (mm/min) | 500 | - | 500 | 500 | - | 500 | 500 | 500 | 375 | 500 |
| | | Allowance (mm) | 1.8 | - | 1.8 | 1.8 | - | 1.8 | 1.8 | 1.8 | 2.4 | 1.8 |
| | Second grinding | Grit number of grindstone | SD800P | - | SD800P | SD800P | - | SD800P | SD800P | SD800P | SD800P | SD800P |
| | | Median diameter D50 (µm) | 16.2 | - | 16.2 | 16.2 | - | 16.2 | 16.2 | 16.2 | 16.2 | 16.2 |
| | | Feed speed (mm/min) | 1000 | - | 1000 | 1000 | - | 1000 | 1000 | 1000 | 1000 | 1000 |
| | | Allowance (mm) | 0.1 | - | 0.1 | 0.1 | - | 0.1 | 0.1 | 0.1 | 0.1 | 0.1 |
| Machining result | Machining time | | 1.08 | - | 1.32 | 1.32 | - | 1.32 | 1.32 | 1.56 | 1.74 | 2.26 |
| | Quality | | ○ | - | ○ | ○ | - | ○ | ○ | ○ | × | ○ |

**(Table 2)**

| | | | Example 11 | Example 12 | Example 13 |
|---|---|---|---|---|---|
| Glass material | | | VFL laminated | | VFL laminated |
| Perimeter of imaginary line (mm) | | | 254 | | 769 |
| Shape of imaginary line | | | Quadrangle: 40 × 100 mm, R: 15 mm | | Concave trajectory |
| Cutting out means | | | Laser light | Grindstone | Laser light |
| Cutting condition | | Laser power [W] | 500 | | 800 |
| | | Scanning speed [mm/min] | 300 | Tool: ø10 | 600 |
| | | | | Rotational frequency: 20000 rpm | |
| | | Irradiation diameter [mm] | 0.1 | | 0.1 |
| | | | | Feed speed: 200 mm/min | |
| | | Air flow rate [L/min] | 182.5 | | 182.5 |
| | | Thickness t [mm] | 4.8 | 4.8 | 4.8 |
| Width D of damaged layer (µm) | | | 1518 | - | 774 |
| Cut-out achievement result | | | ○ | × | ○ |
| Chamfering condition | First grinding | Grit number of grindstone | SD400M | - | SD400M |
| | | Median diameter D50 (µm) | 37.9 | - | 37.9 |
| | | Feed speed (mm/min) | 750 | - | 1500 |
| | | Allowance (mm) | 1.8 | - | 0.9 |
| | Second grinding | Grit number of grindstone | SD800M | - | SD800M |
| | | Median diameter D50 (µm) | 16.2 | - | 16.2 |
| | | Feed speed (mm/min) | 800 | - | 800 |
| | | Allowance (mm) | 0.1 | - | 0.1 |
| Machining result | Machining time | | 1.50 | - | 1.22 |
| | Quality | | ○ | - | ○ |

### (Example 1)

In Example 1, a glass preform was prepared that is composed of one glass substrate having a thickness t of 0.4 mm. Dragontrail (registered trademark) manufactured by AGC Inc. was used as the glass substrate. An imaginary line was set that has a generally rectangular shape having a length of 50 mm, a width of 100 mm, and R at four vertexes of 10 mm, on the glass preform. The glass preform was then irradiated with continuous laser light along the imaginary line using ML3122VZ20, manufactured by Mitsubishi Electric Corporation while air was jetted as a gas under the following conditions to thus cut the glass preform along the imaginary line. Then, a region enclosed by the imaginary line was cut out from the glass preform, and the portion not cut out but left was obtained as the glass plate.
- Wavelength: 10.6 µm
- Laser power: 200 W
- Feed speed (scanning speed): 1200 mm/min
- Irradiation diameter: 0.2 mm
- Air flow rate: 116 L/min

The cut surface of the obtained glass plate was observed with a microscope, and the width D of the damaged layer was measured. The measurement result is shown in Table 1.

A first grinding process was performed on the cut surface of the obtained glass plate using a grindstone having abrasive grains having a grit number of SD400P and a median diameter D50 of 37.9 µm, and thereafter, a second grinding process was performed on the cut surface that has been ground in the first grinding process, using a grindstone having abrasive grains having a grit number of SD800P and a median diameter D50 of 16.2 µm to thus obtain a glass article. The allowance in the first grinding process was 1.8 mm, and the allowance in the second grinding process was 0.1 mm.

### (Examples 2 to 10)

In Examples 2 to 10, glass articles were obtained in a similar manner to that in Example 1 except that the production conditions were as shown in Table 1.

### (Examples 11 to 12)

In Examples 11 to 12, laminated glass was used as the glass preforms, where the laminated glass was formed of a first glass substrate having a thickness t of 2 mm, a second glass substrate having a thickness t of 2 mm, an intermediate layer formed of PVB having a thickness of 0.78 mm, provided between the first glass substrate and the second glass substrate, and soda-lime glass. Soda-lime glass manufactured by AGC Inc. was used as the first glass substrate and the second glass substrate.

Also in Examples 11 to 12, glass articles were obtained in a similar manner to that in Example 1 except that the production conditions were as shown in Table 2.

### (Example 13)

In Example 13, laminated glass similar to that in Example 11 was used as the glass preform. On this glass preform, a concave trajectory was set that has a start point and an end point on a same side and is concave inward in the in-plane direction. Also in Example 13, a glass article was obtained in a similar manner to that in Example 1 except that the production conditions were as shown in Table 2.

### (Evaluation)

Cut-out achievement result, machining time, and quality of the glass article were evaluated for each example.

The results of evaluation of cut-out achievement result are shown such that a case where a region enclosed by an imaginary line was successfully cut out from the cut glass preform and a glass plate was obtained is expressed with a symbol "○", and a case where a region enclosed by an imaginary line was not successfully cut out, thereby failing to obtain a glass plate is expressed with a symbol "×". Note that grinding using a grindstone was not performed and machining time and quality were not evaluated for the examples in which cutting out was not successful.

In evaluation of the machining time, a total time (in minutes) of the time required for cutting the glass preform and the time required for grinding the glass plate was calculated as the machining time.

The results of evaluation of quality are shown such that a case where there was no chipping or shell chip on the glass surface in contact with the ground surface of the glass article is expressed with a symbol "○", and a case where there was chipping or a shell chip is expressed with a symbol "×".

In evaluation of Examples 1 to 10, a case where all of the conditions that the cut-out achievement result is "○", that the machining time is two minutes or less, and that the quality is "O" are satisfied is determined as pass, and a case where at least one of these was not satisfied is determined as fail. In evaluation of Examples 11 to 12, a case where all of the conditions that the cut-out achievement result is "○", that the machining time is three minutes or less, and that the quality is "○" are satisfied is determined as pass, and a case where at least one of these was not satisfied is determined as fail.

Examples 1, 3 to 4, 6 to 8, 11, and 13, which are examples, are acceptable, and it can be seen that a glass article having a desired shape can be efficiently obtained while reducing or preventing deterioration in quality. In contrast, in Examples 2 and 5, which are comparative examples, the width of the damaged layer was less than the lower limit (0.2 t) of Formula (1), and was too small, thereby failing to appropriately cut the glass preform, and failing to cut out the applicable portion. In addition, in Example 9, which is a comparative example, the width of the damaged layer exceeded the upper limit (2000 µm) of Formula (1), and was too large, thereby failing to reduce or prevent deterioration in quality. Moreover, in Example 10, which is a comparative example, cutting using a grindstone resulted in a long machining time, thereby failing to obtain a glass article efficiently. Furthermore, in Example 12, which is a comparative example, cutting of the laminated glass using a grindstone failed, thereby failing to cut out the applicable portion.

Although embodiments of the present invention have been described above, embodiments are not limited by the description of these embodiments. In addition, the above-described components include those that can be easily conceived by those skilled in the art, those that are substantially the same, and those within the so-called equivalent scope. Moreover, the above-described components can be combined with each other as appropriate. Furthermore, various omissions, substitutions, and/or modifications in components can be made without departing from the gist of the above-described embodiments.

### Reference Signs List

1 GLASS PREFORM
10 GLASS SUBSTRATE
10A FIRST MAIN SURFACE, SECOND MAIN SURFACE
20 GLASS PLATE
20C CUT SURFACE
20D DAMAGED LAYER
20E GROUND SURFACE
20T GLASS ARTICLE
D WIDTH
R IMAGINARY LINE

## Claims

1. A glass article production method comprising:
setting an imaginary line on a main surface of a glass preform including a glass substrate having a thickness of 0.4 mm or more;
obtaining a glass plate by irradiating the glass preform with laser light having a wavelength in a range from 9.1 µm to 10.8 µm inclusive along the imaginary line to cut the glass preform along the imaginary line and separating a portion enclosed by the imaginary line from the glass preform; and
obtaining a glass article by grinding a cut surface of the glass plate using a grindstone, wherein
the imaginary line has a shape having a start point and an end point being positioned on end surfaces of the glass preform, the shape having a trajectory concave inward in an in-plane direction of the main surface of the glass preform, or the imaginary line has a shape having a closed curve,
the imaginary line has a perimeter of 60 mm or more,
a damaged layer is formed on the cut surface of the glass plate by cutting the glass preform by irradiation with the laser light, and the damaged layer has a width D satisfying Formula (1) below, and
the damaged layer is removed by grinding using the grindstone: $0.2 * t \leq D \leq 2000 μm$ (1)
where t is a thickness (µm) of the glass preform.

2. The glass article production method according to claim 1, wherein the width D of the damaged layer satisfies Formula (2) below: $0.2 * t + 100 μm \leq D \leq 2000 μm$ (2).

3. The glass article production method according to claim 1 or 2, wherein the imaginary line includes a first section and a second section, the first section extending from a start point to an intermediate point, and the second section passing through a trajectory encircling the start point and returning to the intermediate point.

4. The glass article production method according to claim 3, wherein the first section and the second section are connected to each other continuously.

5. The glass article production method according to claim 3, comprising:
further setting a reserved imaginary line when the imaginary line is set, the reserved imaginary line being connected to the second section of the imaginary line and extending to a point positioned at a position different from an end point of the second section,
in the first section and in the second section of the imaginary line,
moving an irradiation position of the laser light relative to the glass preform along the imaginary line while irradiating the glass preform with the laser light, and
in a section where the reserved imaginary line is set, moving the irradiation position relative to the glass preform along the reserved imaginary line while irradiating the glass preform with the laser light is stopped.

6. The glass article production method according to claim 1 or 2, wherein the glass preform has a curved portion.

7. The glass article production method according to claim 1 or 2, wherein the glass preform is laminated glass including a first glass substrate, a second glass substrate, and an intermediate layer provided between the first glass substrate and the second glass substrate.

8. The glass article production method according to claim 7, wherein the grindstone has a disk shape, the disk shape having an outer circumferential surface serving as a grinding surface, and the grindstone has a plurality of grooves formed to be circumferentially arranged on the outer circumferential surface.

9. The glass article production method according to claim 1 or 2, wherein when the cut surface of the glass plate is ground using the grindstone, the cut surface is ground using a first grindstone having abrasive grains having a median diameter D50 in a range from 30 µm to 50 µm inclusive, and the cut surface is thereafter ground using a second grindstone having abrasive grains having a median diameter D50 in a range from 10 µm to 25 µm inclusive.

10. The glass article production method according to claim 1 or 2, wherein when the cut surface of the glass plate is ground using the grindstone, the grindstone is fed at a feed speed in a range from 200 mm/min to 3000 mm/min inclusive.

11. A glass article comprising a first glass article having a thickness of 0.4 mm or more, a second glass article having a thickness of 0.4 mm or more, and an intermediate layer provided between the first glass article and the second glass article, wherein
an opening having a perimeter of 60 mm or more is formed in each of the first glass article and the second glass article,
the opening of the first glass article and the opening of the second glass article overlap each other as viewed from a thickness direction of the glass article, and
an end surface of the opening of the first glass article and an end surface of the opening of the second glass article are misaligned with each other by an amount of misalignment of 100 µm or less in an in-plane direction of the glass article.

12. The glass article according to claim 11, wherein
the first glass article has a chamfered portion, the chamfered portion formed in a portion of a peripheral edge of the opening nearer to a first main surface of the first glass article opposite the intermediate layer, and has no chamfered portion in a portion of the peripheral edge of the opening nearer to a second main surface of the first glass article opposite the first main surface, and
the second glass article has a chamfered portion, the chamfered portion formed in a portion of a peripheral edge of the opening nearer to a first main surface of the second glass article opposite the intermediate layer, and has no chamfered portion in a portion of the peripheral edge of the opening nearer to a second main surface of the second glass article opposite the first main surface of the second glass article.

13. The glass article according to claim 12, wherein
the first glass article and the second glass article are curved to be convex in a first direction, the first direction being a direction from the second glass article toward the first glass article, and
the chamfered portion of the opening in the portion nearer to the first main surface of the first glass article has a width smaller than a width of the chamfered portion of the opening in the portion nearer to the first main surface of the second glass article.

14. The glass article according to any one of claims 11 to 13, further comprising: a shielding layer that is provided at a position overlapping the first glass article and the second glass article as viewed from a thickness direction of the glass article, and blocks light, wherein
the shielding layer has an opening, the opening formed to overlap the opening of the first glass article and the opening of the second glass article.

15. The glass article according to any one of claims 11 to 13, further comprising: a heating layer that is provided at a position overlapping the first glass article and the second glass article as viewed from a thickness direction of the glass article, and generates heat, wherein
the heating layer has an opening, the opening formed to overlap the opening of the first glass article and the opening of the second glass article.

16. The glass article according to any one of claims 11 to 13, wherein
the end surface of the opening of the first glass article has an inclination angle of 70° or less with respect to a normal of a main surface of the glass article, and
the end surface of the opening of the second glass article has an inclination angle of 70° or less with respect to the normal of the main surface of the glass article.

17. The glass article according to any one of claims 11 to 13, wherein each of the openings of the first glass article and of the second glass article has a shape in which an inscribed circle of the opening and an end portion of the opening are apart from each other by a distance of 1 mm or more.

18. The glass article according to any one of claims 11 to 13, wherein the glass article has a curved portion.

19. The glass article according to any one of claims 11 to 13, wherein the glass article is used as a windshield of a vehicle or as cover glass for a sensor of a vehicle.
